(19) Europäisches Patentamt
European Patent Office
Office européen des brevets

(11) **EP 3 066 415 B1**

(12) **EUROPÄISCHE PATENTSCHRIFT**

(45) Veröffentlichungstag und Bekanntmachung des Hinweises auf die Patenterteilung:
**13.06.2018   Patentblatt 2018/24**

(21) Anmeldenummer: **14799687.0**

(22) Anmeldetag: **04.11.2014**

(51) Int Cl.:
***G01B 11/00*** *(2006.01)*

(86) Internationale Anmeldenummer:
**PCT/EP2014/073727**

(87) Internationale Veröffentlichungsnummer:
**WO 2015/067611 (14.05.2015 Gazette 2015/19)**

(54) **KOORDINATENMESSGERÄT MIT EINEM OPTISCHEN SENSOR UND EINEM VERBESSERTEN BELEUCHTUNGSMODUL**

COORDINATE MEASURING MACHINE WITH AN OPTICAL SENSOR AND AN IMPROVED ILLUMINATION MODULE

DISPOSITIF DE MESURE DE COORDONNÉES AVEC UN CAPTEUR OPTIQUE ET UN MODULE D'ÉCLAIRAGE PERFECTIONNÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2013   DE 102013112186**

(43) Veröffentlichungstag der Anmeldung:
**14.09.2016   Patentblatt 2016/37**

(73) Patentinhaber: **Carl Zeiss Industrielle Messtechnik GmbH 73447 Oberkochen (DE)**

(72) Erfinder:
• **ENGEL, Thomas**
**73432 Aalen (DE)**
• **DEGEN, Artur**
**07743 Jena (DE)**
• **BERNER, Andrea**
**07745 Jena (DE)**
• **HAVERKAMP, Nils**
**73431 Aalen (DE)**

(74) Vertreter: **Witte, Weller & Partner Patentanwälte mbB Postfach 10 54 62 70047 Stuttgart (DE)**

(56) Entgegenhaltungen:
EP-A1- 2 469 300    WO-A1-2005/059470
US-A1- 2004 136 190    US-A1- 2012 307 495

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Beleuchtungsmodul für einen Metrologiesensor, insbesondere ein Koordinatenmessgerät, zum Vermessen eines Werkstücks mittels eines optischen Sensors, wobei das Beleuchtungsmodul einen Grundkörper mit einer Sensorseite und einer Werkstückseite aufweist, wobei das Beleuchtungsmodul an dem Grundkörper mindestens eine Beleuchtungsanordnung zum Beleuchten des Werkstücks aufweist, wobei die mindestens eine Beleuchtungsanordnung eine Abstrahlcharakteristik mit einem Abstrahlwinkel und einem ersten Lichtintensitätsverlauf in einer ersten Ebene innerhalb des Abstrahlwinkels aufweist, und wobei die Abstrahlcharakteristik des Weiteren einen zweiten Lichtintensitätsverlauf in einer zweiten Ebene innerhalb des Abstrahlwinkels aufweist.

Gemäß einem zweiten Aspekt betrifft die vorliegende Erfindung betrifft ein Beleuchtungsmodul für einen Metrologiesensor, insbesondere ein Koordinatenmessgerät, zum Vermessen eines Werkstücks mittels eines optischen Sensors, wobei das Beleuchtungsmodul einen Grundkörper mit einer Sensorseite und einer Werkstückseite aufweist, wobei das Beleuchtungsmodul an dem Grundkörper mindestens eine Beleuchtungsanordnung zum Beleuchten des Werkstücks aufweist, und wobei die mindestens eine Beleuchtungsanordnung eine Abstrahlcharakteristik mit einem bestimmten Abstrahlwinkel und einem Lichtintensitätsverlauf innerhalb des Abstrahlwinkels aufweist.

Gemäß einem dritten Aspekt betrifft die vorliegende Erfindung ein Koordinatenmessgerät zum Vermessen eines Werkstücks mittels eines optischen Sensors.

Beleuchtungsmodule für Koordinatenmessgeräte sind beispielsweise aus der Druckschrift EP 0 362 625 A2 bekannt.

Metrologiesensoren, insbesondere Koordinatenmessgeräte, sind im Stand der Technik allgemein bekannt. Sie dienen dazu, beispielsweise im Rahmen einer Qualitätssicherung Werkstücke zu überprüfen oder die Geometrie eines Werkstücks vollständig im Rahmen eines sogenannten "Reverse Engineering" zu ermitteln. Darüber hinaus sind vielfältige weitere Anwendungsmöglichkeiten denkbar.

In derartigen Koordinatenmessgeräten können verschiedene Arten von Sensoren zur Anwendung kommen, um die Koordinaten eines zu vermessenden Werkstücks zu erfassen. Beispielsweise sind hierzu taktil messende Sensoren bekannt, wie sie beispielsweise von der Anmelderin unter der Produktbezeichnung "VAST", "VAST XT" oder "VAST XXT" vertrieben werden. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sogenannten "Scanning-Verfahrens" eine Vielzahl von Messpunkten in festgelegten zeitlichen Abständen erfasst werden kann.

Darüber hinaus ist es bekannt, optische Sensoren einzusetzen, die ein berührungsloses Erfassen der Koordinaten eines Werkstücks ermöglichen. Ein Beispiel für einen derartigen optischen Sensor ist der unter der Produktbezeichnung "ViScan" von der Anmelderin vertriebene optische Sensor.

Die Sensoren können dann in verschiedenen Arten von Messaufbauten verwendet werden. Ein Beispiel für einen solchen Messaufbau ist das Produkt "O-INSPECT" der Anmelderin. Bei einem derartigen Gerät finden sowohl ein optischer Sensor als auch ein taktiler Sensor Anwendung, um verschiedene Prüfaufgaben an einer Maschine und idealerweise mit einer einzigen Aufspannung eines zu vermessenden Werkstücks durchzuführen.

Sensorsysteme mit optischen Sensoren finden in der Koordinatenmesstechnik zunehmend Bedeutung. Dabei zeichnen sich optische Sensoren insbesondere durch eine hohe Geschwindigkeit des Messvorgangs aus. Auf diese Weise lassen sich viele Prüfaufgaben beispielsweise in der Medizintechnik, der Kunststofftechnik, der Elektronik und der Feinmechanik durchführen. Selbstverständlich sind darüber hinaus auch verschiedene andere Aufbauten denkbar.

Klassischerweise ist der optische Sensorkopf bzw. der optische Sensor mit einem Trägersystem verbunden, welches das optische Sensorsystem stützt und bewegt. Im Stand der Technik sind verschiedene Trägersysteme bekannt, beispielsweise Portalsysteme, Ständer-, Horizontalarm- und Armsysteme, und alle Arten von Robotersystemen. Die Trägersysteme können dabei des Weiteren Systemkomponenten aufweisen, die ein möglichst flexibles Positionieren des Sensorkopfs ermöglichen. Ein Beispiel hierfür ist das unter der Bezeichnung "RDS" vertriebene Dreh-Schwenk-Gelenk der Anmelderin. Darüber hinaus können verschiedene Adapter vorgesehen sein, um die unterschiedlichen Systemkomponenten des Trägersystems untereinander und mit dem Sensorsystem zu verbinden.

Des Weiteren ist es in der Koordinatenmesstechnik üblich, dass bei der Vermessung von Objekten mit unterschiedlichen Beleuchtungsarten gearbeitet werden kann. Die entsprechenden optischen Sensoren weisen dann eine Videokamera und/oder eine Bildkamera und eine entsprechende Beleuchtung für das Werkstück auf. Des Welteren ist eine feste Abbildungsoptik vorgesehen, die das zu vermessende Werkstück auf die Kamera bzw. die optischen Sensoren der Kamera abbildet. Für Jeden Anwendungsfall bzw, jede Messart sind dabei in der Regel spezifische optische Sensoren mit fest integrierten Beleuchtungen und Abbildungsoptiken vorgesehen.

Beispielsweise zeigt die eingangs genannte Druckschrift EP 0 362 625 A2 eine auswechselbare Frontoptik für einen optischen Tastkopf. Diese Frontoptik ist für einen bestimmten Arbeitsabstand und eine bestimmte Beleuchtungsart ausgebildet. Des Weiteren weist sie das gesamte Objektiv auf, das von dem Werkstück reflektierte Lichtstrahlen auf den optischen Sensor abbildet.

Eine derartige Frontoptik Ist jedoch aufgrund der optischen Elemente zum Abbilden relativ schwer und weist ein relativ großes Volumen auf. Des Weiteren ist eine solche Frontoptik nur für einen bestimmten Anwendungsfall, d.h. in einem bestimmten Arbeitsabstand und für eine bestimmte Beleuchtungsart, verwendbar.

In den Druckschriften EP 0 385 262 A2 und EP 1 373 827 B1 sind darüber hinaus ebenfalls Beleuchtungseinrichtungen für Koordinatenmessgeräte angegeben, die zum einen Abbildungsoptiken aufweisen und zum anderen relativ komplex ausgebildete, beispielsweise schwenk- oder bewegbare Beleuchtungselemente aufweisen, um die Beleuchtung auf verschiedene Arbeitsabstände einzustellen. Auch daraus resultiert jedoch ein relativ komplexer Aufbau solcher Beleuchtungselemente sowie ein eventuell höheres Gewicht und Volumen, was aufgrund der damit verbundenen höheren Trägheit das Regeln des optischen Sensorkopfs, Insbesondere bei schnellen Messvorgängen, erschwert.

Die Druckschrift WO 2005/059470 A1 zeigt ein Verfahren zur dynamischen dreidimensionalen Erfassung und Darstellung einer Oberfläche. Es Ist der Mustererzeugungselement, ein refraktives optisches Element oder ein reflektives optisches Element mit einer Vielzahl von Facetten vorgesehen, um den Lichtstrahl in einer Vielzahl von einzellichtstrahlen aufzuteilen, sodass jeder einzelne Lichtstrahl ein Musterelement des Beleuchtungsmusters erzeugt.

Die Druckschrift EP 2 469 300 A1 zeigt eine 3D Kamera und ein verfahren zur dreidimensionalen Überwachung eines Überwachungsbereichs. Es wird eine 3D-Kamera mit mindestens einem Bildsensor und mit mindestens einer Beleuchtungseinheit angegeben, wobei die Beleuchtungseinheit eine Lichtquelle zum Aussenden eines Lichtstrahls und ein in dem Lichtstrahl angeordnetes optisches Mustererzeugungselement zur Erzeugung eines Beleuchtungsmusters In einen Überwachungsbereich der 3D Kamera aufweist.

Des weiteren zeigt die Druckschrift US 2012/0307495 A1 eine optische Linse und eine optische Linsenplatte. Wenn die optische Linse an eine Straßenlaterne angebracht wird, kann es möglich sein, die Lichtnutzung auf einer Straßenseite zu verbessern.

Des Weiteren zeigt die Druckschrift EP 0 969 304 A2 eine Vorsatzoptik für ein Ringlicht zur Lichtintensitätsverteilung auf einem zu beleuchtenden Objekt mit einem konzentrisch zum Ringlicht angeordneten ringförmigen optischen Element, das eine rotationssymmetrische Zone zunehmender Brechkraft aufweist,

Abhängig von dem zu untersuchenden Werkstück und dem mittels des optischen Sensors angewendeten Messverfahren ist das Werkstück auf unterschiedliche Arten zu beleuchten. Dabei kann beispielsweise ein Arbeitsabstand, in dem der Messvorgang vorgenommen wird, variieren. Des Weiteren kann unter Umständen eine Beleuchtung mit unterschiedlichen Einfallswinkeln auf eine Oberfläche des Werkstücks gewünscht sein. Daher sind in der Praxis Beleuchtungsmodule entweder zu wechseln oder ein Beleuchtungsmodul weist mehrere, wechselnd schaltbare Lichtquellen auf, um die unterschiedlichen Arten von Beleuchtungen bereitzustellen. Derartige Anordnungen machen ein Beleuchtungsmodul jedoch zum einen schwerer und erhöhen zum anderen die Kosten eines Beleuchtungsmoduls. Es ist jedoch grundsätzlich wünschenswert, mittels eines Beleuchtungsmoduls mehrer Arten von Beleuchtungen bereitstellen zu können, d.h. Beleuchtungen in unterschiedlichen Arbeitsabständen und/oder mit unterschiedlichen Einfallswinkeln.

Es ist daher eine Aufgabe der vorliegenden Erfindung, ein Beleuchtungsmodul für einen Metrologiesensor, Insbesondere ein Koordinatenmessgerät, mit einem optischen Sensor anzugeben, das einfach aufgebaut ist und eine größtmögliche Flexibilität bei der Verwendung des optischen Sensors des Koordinatenmessgeräts ermöglicht, insbesondere eine Verwendung unterschiedlicher Arbeitstabstände.

Erfindungsgemäß wird daher gemäß einem ersten Aspekt bereitgestellt ein Koordinatenmessgerät zum Vermessen eines Werkstücks mittels eines optischen Sensors, wobei das Koordinatenmessgerät ein Beleuchtungsmodul aufweist, wobei das Beleuchtungsmodul einen Grundkörper mit einer Sensorseite und einer Werkstückseite aufweist, wobei das Beleuchtungsmodul an dem Grundkörper mindestens eine Beleuchtungsanordnung zum Beleuchten des Werkstücks aufweist, wobei die mindestens eine Beleuchtungsanordnung eine Abstrahlcharakteristik mit einem Abstrahlwinkel und einem ersten Lichtintensitätsverlauf in einer ersten Ebene innerhalb des Abstrahlwinkels aufweist, und wobei die Abstrahlcharakteristik des Weiteren einen zweiten Lichtintensitätsverlauf in einer zweiten Ebene innerhalb des Abstrahlwinkels aufweist, dadurch gekennzeichnet, dass der erste Lichtintensitätsverlauf der mindestens einen Beleuchtungsanordnung innerhalb der ersten Ebene asymmetrisch ist, und wobei der zweite Lichtintensitätsverlauf der mindestens einen Beleuchtungsanordnung innerhalb der zweiten Ebene asymmetrisch Ist, wobei das Beleuchtungsmodul mehrere Beleuchtungsanordnungen aufweist, wobei sich die ersten Ebenen der Beleuchtungsanordnungen in einer einzigen Geraden schneiden, und wobei ein Messkegel oder Messzylinder des optischen Sensors entlang der Geraden verläuft.

Die Strahlungsintensität einer Lichtquelle Ist der Anteil der gesamten Strahlungsleistung der Lichtquelle In einer gegebenen Raumrichtung in einem beliebig kleinen Raumwinkelelement. Die Strahlungsleistung als Sl-Einhelt wird somit angegeben zu

$$I = \frac{d\Phi}{d\Omega}$$

wobei I die Strahlungsintensität in Watt (W) pro Steradiant (sr) ist, Φ die gesamte Strahlungsleistung in Watt und Ω der Raumwinkel in Steradiant. Ist eine Richtungsverteilungsfunktion einer Lichtquelle bekannt, kann die Strahlungsintensität auch durch multiplizieren mit der gesamten Strahlungsleitung ermittelt werden. Im Falle von Licht spricht man statt Strahlungsintensität auch von "Lichtintensität". In diesem Sinne wird der Begriff im Rahmen der vorliegenden Anmeldung verwendet, Die Lichtintensität beschreibt die ungewichtete Verteilung der Strahlungs- bzw. Lichtleistung über den Raum. Die SI-Einheit "Lichtstärke" beschreibt diese ebenfalls, jedoch gewichtet mit dem Helligkeitsempfinden eines Standardbeobachters. Da vorliegend grundsätzlich auch optische Sensoren und Beleuchtungsanordnungen denkbar sind, die bspw. in einem infraroten Wellenlängenbereich arbeiten, sind photometrische Einheiten, die auf das Helligkeltsempfinden des menschlichen Auges abstellen, jedoch ungeeignet. Im Rahmen der vorliegenden Anmeldung wird die Abstrahlcharakteristik der Beleuchtungsanordnungen daher mit der Verteilung der Lichtintensität beschrieben, um tatsächlich einen reinen energetischen Vergleich zu geben.

Unter dem "Abstrahlwinkel" wird vorliegend der Winkel zwischen den Richtungen verstanden, in denen eine Beleuchtungsanordnung 50% ihrer maximalen Lichtintensität abstrahlt.

Eine der Strahlungsintensität verwandte SI-Einheit ist die Bestrahlungsstärke, die mit

$$E = \frac{d\Phi}{dA}$$

angegeben wird, wobei E die Bestrahlungsstärke in Watt (W) pro Quadratmeter ($m^2$) ist, Φ die gesamte Strahlungsleistung in Watt und A die Fläche in Quadratmetern. Die Bestrahlungsstärke lässt sich beispielsweise mittels eines Radiometers messen. Beide Größen sind mittels der Gleichung

$$E = \frac{I}{r^2}$$

ineinander überführbar, wobei r ein Abstand zu der Strahlungsquelle ist. Auf diese Weise lässt sich eine Abstrahlcharakteristik einer Strahlungsquelle ausmessen.

Unter dem "Abstrahlwinkel" wird vorllegend der Winkel zwischen den Richtungen verstanden, in denen eine Beleuchtungsanordnung 50% ihrer maximalen Lichtintensität abstrahlt.

Unter einem "Ring" ist im Rahmen der vorllegenden Anmeldung ein beliebiger geschlossener Querschnitt zu verstehen. Der Begriff "Ring" bedeutet somit nicht zwangsweise, dass der Querschnitt um eine Achse rotiert wird, so dass sich ein kreisförmiger Ring ergibt. Unter einem "Ring" wird das Extrudieren eines Querschnitts entlang einer beliebigen geschlossenen Linie verstanden, Beispielsweise kann der "Ring" somit auch eine viereckige Außenform aufweisen, wie sie beispielsweise entsteht, wenn ein beliebiger Querschnitt, beispielsweise ein Kreis oder ein Rechteck, entlang einer geschlossenen quadratischen Linie extrudiert wird.

Unter dem Begriff "frei" ist zu verstehen, dass ein Beleuchtungsmodul eine mittige Aussparung aufweisen kann. Durch diese mittige Aussparung kann das Licht, das letztendlich auf den optischen Sensor abgebildet werden soll, ohne Strahlablenkung hindurchtreten. In dem Randbereich können dann die mindestens eine Beleuchtungsanordnung und die erste Schnittstelleneinrichtung zum sensorseitigen Koppeln des Beleuchtungsmoduls angeordnet werden.

Unter "sensorseitig" wird dabei diejenige Seite des Beleuchtungsmoduls verstanden, die in Richtung des optischen Sensors weist. Sie liegt einer "werkstückseitigen" Seite des Beleuchtungsmoduls gegenüber, die in Richtung des Werkstücks weist, Von der werkstückseitigen Seite des Beleuchtungsmoduls wird darüber hinaus das Licht zur Beleuchtung des Werkstücks abgestrahlt.

Durch das gemäß dem ersten Aspekt vorgeschlagene Beleuchtungsmodul wird es möglich, gleichzeitig mehrere Arbeitsbereiche bzw. Arbeitsebenen mittels der mindestens einen Beleuchtungsanordnung zu beleuchten. Bisher mussten immer mehrere Beleuchtungsanordnungen bzw. Gruppen von Beleuchtungsanordnungen für verschiedene Arbeitsbereiche bzw. Arbeitsebenen vorgesehen werden, die dann wahlweise geschaltet wurden. In anderen Ausführungsformen mussten die Beleuchtungsanordnungen relativ zu dem Sensor bewegt werden, um unterschiedliche Arbeitsabstände einzustellen. Mittels der vorliegenden Erfindung besteht hierfür jedoch keine weitere Notwendigkeit, Es wurde festgestellt, dass die Lichtintensität vieler Beleuchtungsanordnungen derart hoch ist, dass sie auch unterhalb der maximalen Lichtintensität noch eine ausreichende Beleuchtung von Werkstücken bereitstellen können. Insbesondere ist dies beispielsweise bei modernen LEDs der Fall. In der Regel sind alle Orte innerhalb eines Abstrahlwinkels, d.h. alle Orte mit einer Lichtintensität von mehr als 50 %, ausreichend beleuchtet, um mit modernen optischen Sensoren ein verwertbares Bild zu erfassen. Insbesondere ist dies der Fall, wenn, wie erfindungsgemäß vorgeschlagen, innerhalb des Abstrahlwinkels der Lichtintensitätsverlauf asymmetrisch eingestellt ist Auf diese Weise ist es beispielsweise möglich, aber nicht zwingend erforderlich, "Schwerpunkte" hinsichtlich der Lichtintensität zu bilden, und zwar dies derart, dass bestimmte Arbeitsbereiche bzw. Arbeitsebenen bestrahlt werden. Auf diese Weise kann es dann möglich sein, mehrere Arbeitsbereiche bzw. Arbeitsebenen gleichzeitig ausreichend zu bestrahlen, so dass in mehreren Arbeitsebenen gearbeitet werden kann, ohne dass die Beleuchtung ausgetauscht oder umgeschaltet werden muss. Auf diese Weise können Beleuchtungsanordnungen eingespart und der konstruktive Aufbau von Beleuchtungsmodulen vereinfacht werden.

Des Weiteren ermöglicht das Beleuchtungsmodul gemäß dem ersten Aspekt der Erfindung nunmehr eine Beleuchtung des Werkstücks, die nicht nur allgemein innerhalb des Abstrahlwinkels asymmetrisch ist, sondern in zwei, insbesondere senkrecht aufeinander stehenden Richtungen, Innerhalb des Abstrahlwinkels, asymmetrisch ausgebildet ist. Dies ermöglicht es, beliebige dreidimensional ausgestaltete Lichtintensitätsverläufe zu erzeugen. Beispielsweise ist dadurch der Zwang aufgehoben, dass ein Beleuchtungsfeld eines Werkstücks zwangsläufig rotationssymmetrisch aufgebaut ist, wenn die Beleuchtungsanordnungen rotationssymmetrisch angeordnet sind. Selbstverständlich könnte dies bspw. auch durch nicht-rotationssymmetrische Anordnung der Beleuchtungsanordnungen erzielt werden, jedoch erhält man deutlich mehr Freiheiten durch die Ermöglichung einer beliebigen Ausgestaltung der Lichtintensitätsverläufe Innerhalb des Abstrahlwinkels. Technisch ergibt sich so insbesondere der Vorteil, bspw, eine besonders hohe Lichtintensität auf einem rechteckigen Bereich bereitzustellen. In modernen Kameras sind die lichtempfindlichen Empfänger in der Regel ebenfalls in rechteckigen Arrays angeordnet, insbesondere sind heutzutage Auflösungen in einem Format 16:9 üblich. Hier ist es von Vorteil, auf dem Werkstück einen entsprechend geformten Bereich mit identischem Seitenverhältnis mit hoher Lichtintensität ausleuchten zu können,

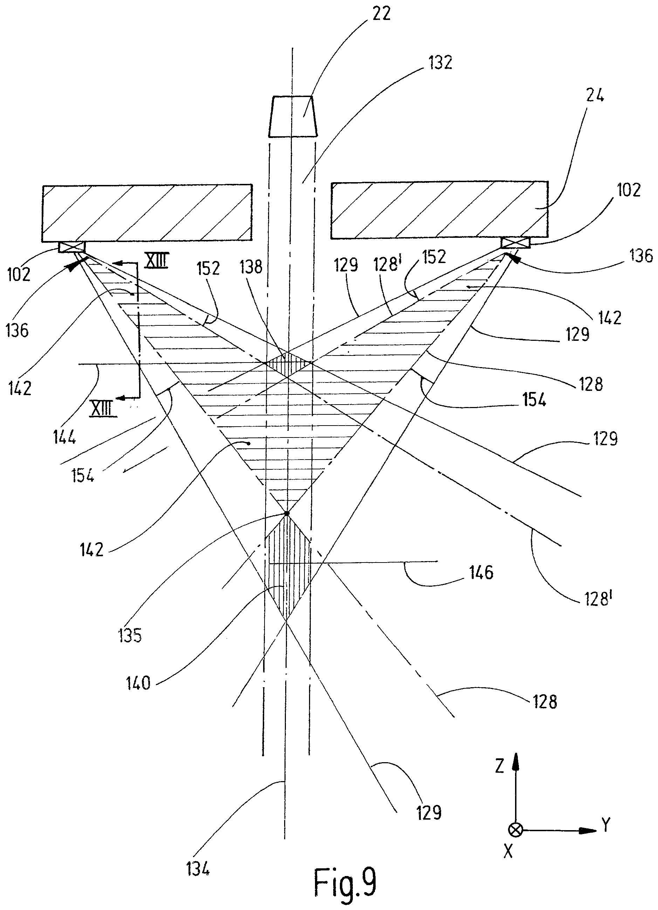

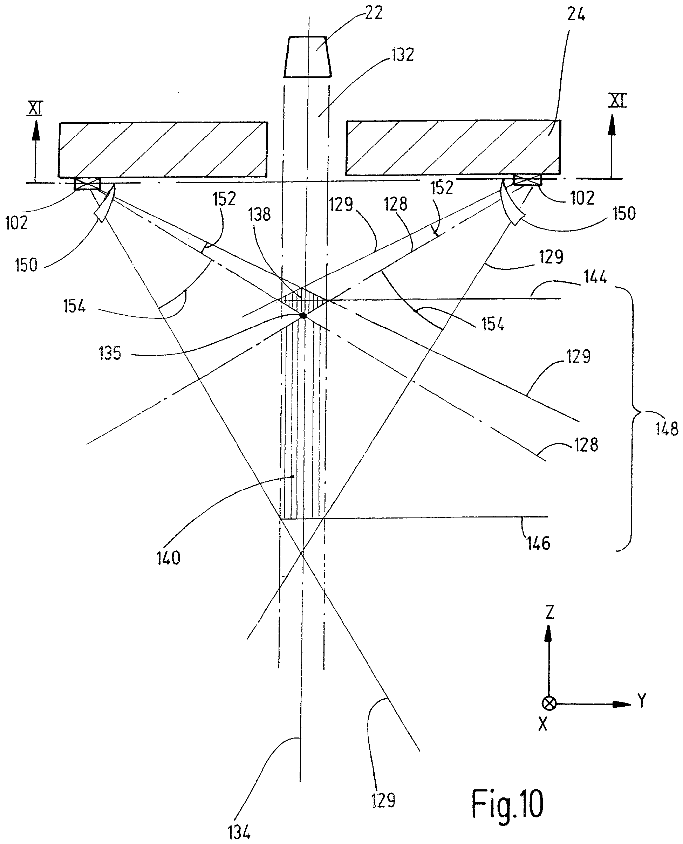

Die Beleuchtungsanordnungen weisen somit allesamt in Richtung eines Zentrums des Beleuchtungsmoduls. Die ersten Ebenen laufen - von oben bzw. In Z-Richtung betrachtet - sternförmig auf dieses Zentrum zu und schneiden sich allesamt in einer einzigen Geraden. Setzt man bspw. eine rotationssymmetrische Anordnung der mehreren Beleuchtungsanordnungen voraus, würde die einzige Gerade mit der Rotationssymmetrieachse zusammenfallen. Bei einer beispielhaften Ausgestaltung des Beleuchtungsmoduls als kreisförmiger Ring würde etwa die Mittelachse des Rings ebenfalls mit der einzigen Geraden zusammenfallen und kann, bei entsprechender Anordnung des optischen Sensors, auch mit der optischen Achse der Abbildungsoptik des optischen Sensors in einem eingebauten Zustand des Beleuchtungsmoduls zusammenfallen. Eine Asymmetrie kann dann bspw. in dieser Ebene vorgesehen sein, wie dies beispielhaft in den Figuren 9 und 10 dargestellt ist. Darüber hinaus kann die Asymmetrie auch in einer Ebene senkrecht zu den Schnittdarstellungen in den Figuren 9 und 10 vorhanden sein.

Erfindungsgemäß wird daher gemäß einem zweiten Aspekt bereitgestellt ein Koordinatenmessgerät zum Vermessen eines Werkstücks mittels eines optischen Sensors, wobei das Koordinatenmessgerät ein Beleuchtungsmodul aufweist, wobei das Beleuchtungsmodul einen Grundkörper mit einer Sensorseite und einer Werkstückseite aufweist, wobei das Beleuchtungsmodul an dem Grundkörper mindestens eine Beleuchtungsanordnung zum Beleuchten des Werkstücks aufweist, und wobei die mindestens eine Beleuchtungsanordnung eine Abstrahlcharakteristik mit einem Abstrahlwinkel und einem Lichtintensitätsverlauf innerhalb des Abstrahlwinkels aufweist, dadurch gekennzeichnet, dass der Lichtintensitätsverlauf der mindestens einen Beleuchtungsanordnung Innerhalb des Abstrahlwinkels asymmetrisch ist, dass die mindestens eine Beleuchtungsanordnung jeweils mindestens ein refraktives optisches Element aufweist, das die Abstrahlcharakteristik der jeweiligen Beleuchtungsanordnung moduliert, dass die Beleuchtungsanordnung des Weiteren mindestens ein Kollimationselement zum Bereitstellen eines kollimierten Strahlenbündels auf das mindestens eine refraktive optische Element aufweist, und dass das mindestens eine refraktive optische Element mehrere Subaperturen aufweist, wobei der optische Sensor mehrere Arbeitsabstände aufweist, und wobei jede Subapertur zum Ausleuchten eines anderen Arbeitsabstands des optischen Sensors ausgebildet ist.

Ein so ausgestaltetes Beleuchtungsmodul bietet insbesondere den Vorteil, bspw. den in zwei Richtungen asymmetrischen Lichtintensitätsverlauf gemäß dem ersten Aspekt bereitstellen zu können.

Unter einer "Subapertur" wird ein Bereich oder mehrere Bereiche des refraktiven optischen Elements verstanden, die denselben mittleren Ablenkungswinkel für einen Lichtstrahl aufweisen. Mit anderen Worten zeichnet sich eine Subapertur somit durch eine bestimmte mittlere prismatische Wirkung aus Wie Im Folgenden noch erläutert wird, ist es nicht zwingend, dass die Subapertur aus einem zusammenhängenden Bereich gebildet ist, es kann auch vorgesehen sein, dass zwei voneinander getrennte Bereiche des refraktiven optischen Elements dieselbe mittlere prismatische Wirkung aufweisen. Auf diese Weise brechen verschiedene Subaperturen Teile des auf das refraktive optische Element einfallenden Strahlenbündels im Mittel In verschiedene Richtungen. Die Subapertur kann zusätzlich bspw. eine konvergierende oder divergierende Beeinflussung des kollimierten Strahlenbündels vornehmen, also auch eine sphärische Wirkung haben. Selbstverständlich ist ergänzend oder alternativ auch eine astigmatische Wirkung möglich. Generell kann die Oberfläche jeder Subapertur auch als Freiformfläche ausgebildet sein. Entscheidend ist jedoch, dass die mittlere prismatische Wirkung, mit anderen Worten die "mittlere Strahlablenkung", der Subaperturen verschieden voneinander ist.

Auf diese Weise ist es möglich, dass bspw. eine erste Subapertur ein Teil des kollimierten Strahlenbündels in einen ersten Arbeitsabstand des optischen Sensors ablenkt. Eine zweite Subapertur lenkt dann einen zweiten Teil des kollimierten Strahlenbündels in einen zweiten Arbeitsabstand ab usw. Konvergierende Wirkungen der Subaperturen können beispielsweise vorgesehen sein, um die verschiedenen Teile der kollimierten Strahlenbündel auf einen bestimmten Arbeitsabstand zu fokussieren, um In einem darüber- oder darunterliegenden Arbeitsabstand keine oder nur eine diffuse Ausleuchtung breitzustellen, um Reflexionen zu vermeiden. Insbesondere kann somit vorgesehen sein, dass mindestens eine der mehreren Subaperturen eine konvergierende Wirkung aufweist.

Bei dem Koordinatenmessgerät gemäß dem ersten oder dem zweiten Aspekt kann des Weiteren eine Halteeinrichtung mit mindestens einem Magazinplatz, insbesondere mehreren Magazinplätzen, für das Beleuchtungsmodul bzw. die Beleuchtungsmodule vorgesehen sein.

Die eingangs gestellte Aufgabe wird daher vollkommen gelöst.

In einer Ausgestaltung des Koordinatenmessgeräts gemäß dem ersten Aspekt kann vorgesehen sein, dass die erste Ebene und die zweite Ebene senkrecht aufeinander stehen.

Hierdurch wird es möglich, die Abstrahlcharakteristik des Beleuchtungsmoduls besonders stark zu beeinflussen.

In einer weiteren Ausgestaltung des Koordinatenmessgeräts gemäß dem ersten Aspekt kann vorgesehen sein, dass sich die erste Ebene und die zweite Ebene in einer Geraden schneiden, die einer Richtung der maximalen Lichtintensität einer jeweiligen Beleuchtungsanordnung der mindestens einen Beleuchtungsanordnung entspricht.

Folglich bilden die erste Ebene und die zweite Ebene eine Art Kreuz aus, dessen Zentrum koaxial zu der Richtung der maximalen Lichtintensität des Beleuchtungsmoduls verläuft, Auf diese Weise kann durch geeignete Ausgestaltung der Beleuchtungsanordnung eine Gestaltung der Abstrahlcharakteristik in nahezu jeder Weise ausgehend von der Richtung der maximalen Lichtintensität erfolgen

In einer weiteren Ausgestaltung des Koordinatenmessgeräts gemäß dem ersten Aspekt kann vorgesehen sein, dass die mindestens eine Beleuchtungsanordnung jeweils mindestens ein refraktives optisches Element aufweist, das die Abstrahlcharakteristik der jeweiligen Beleuchtungsanordnung moduliert.

Mittels einer refraktiven Struktur können gegenüber bspw. in dem diffraktiven optischen Element oder einem holografischen optischen Element in der Regel geringere chromatische Aberrationen bzw. kleinere Farbaufspaltungen und eine größere Effizienz in der Nutzung der Lichtleistung erzielt werden,

In einer weiteren Ausgestaltung des Koordinatenmessgeräts gemäß dem ersten Aspekt kann vorgesehen sein, dass die Beleuchtungsanordnung des Weiteren mindestens ein Kollimationselement zum Bereitstellen eines kollimierten Strahlenbündels auf das mindestens eine refraktive optische Element aufweist. Das Kollimationselement ist insbesondere separat von dem refraktiven optischen Element ausgebildet. Insbesondere kann das Kollimationselement ebenfalls als refraktives optisches Element ausgebildet sein. Es kann aber auch als Spiegel oder reflektierendes optisches Element ausgebildet sein.

Auf diese Welse kann zum einen die Auslegung des refraktiven optischen Elements vereinfacht und des Weiteren eine bessere Nutzung der gesamten Lichtleistung des Strahlenbündels erzielt werden.

In einer weiteren Ausgestaltung des Koordinatenmessgeräts kann vorgesehen sein, dass das mindestens eine refraktive optische Element mehrere Subaperturen aufweist.

Auch in dem Koordinatenmessgeräts gemäß dem ersten Aspekt kann somit vorgesehen sein, dass das mindestens eine refraktive optische Element Subaperturen aufweist. Auf diese Weise wird es möglich, durch Nutzung lediglich eines refraktiven optischen Elements und einer einzigen Lichtquelle, bspw. einer LED, pro Beleuchtungsanordnung gleichzeitig mehrere Arbeitsabstände des optischen Sensors des Koordinatenmessgeräts wie gewünscht auszuleuchten.

In einer weiteren Ausgestaltung des Koordinatenmessgeräts sowohl bis zum ersten Aspekt der Erfindung als auch gemäß dem zweiten Aspekt der Erfindung kann vorgesehen sein, dass das refraktive optische Element oder eine Oberfläche, insbesondere die dem Werkstück zugewandte Oberfläche des mindestens einen refraktiven optischen Elements mindestens zwei Bereiche aufweist, wobei eine Subapertur jeweils für mindestens einem der Bereiche ausgebildet Ist.

Beispielsweise kann das refraktive optische Element oder seine dem Werkstück zugewandte Oberfläche In fünf Bereiche aufgeteilt sein, wobei der erste und der fünfte Bereich dieselbe mittlere prismatische Wirkung aufweisen und somit eine erste Subapertur ausbilden. Der zweite und vierte Bereich können eine andere mittlere prismatische Wirkung aufweisen und eine zweite Subapertur ausbilden, und der dritte Bereich kann eine dritte mittlere prismatische Wirkung aufweisen und eine dritte Subapertur ausbilden. Auf diesen Welse könnten dann drei Arbeitsabstände gleichzeitig beleuchtet werden. Auf diese Weise ist es bspw. möglich, ein querschnittskreisförmiges refraktives optisches Element symmetrisch hinsichtlich seiner optischen Wirkung auszugestalten und zu nutzen. Insbesondere können auf diese Welse die Bereiche so gewählt werden, dass jeder Subapertur die gleiche Fläche zugewiesen wird. So wird es bspw. möglich, für eine Subapertur zwei kleinere Bereiche vorzusehen, die zusammengenommen aber dieselbe Fläche ergeben wie ein größerer Bereich, der alleine eine Subapertur ausbildet. Dies erhöht die Flexibilität in der optischen Gestaltung des refraktiven optischen Elements.

In allen Ausgestaltungen kann vorgesehen sein, dass die dem Werkstück zugewandte Oberfläche des refraktiven optischen Elements und/oder die dem Werkstück abgewandte Oberfläche des refraktiven optischen Elements eine Oberfläche ist, die die gewünschte optische Wirkung bereitstellt. Insbesondere kann dies die dem Werkstück abgewandte Oberfläche des refraktiven optischen Elements sein, wobei die dem Werkstück zugewandte Oberfläche glatt bzw. eben ausgestaltet Ist. Die verbessert die Möglichkeit zur Reinigung dieser außen gelegenen Oberfläche und damit die Werkstatttauglichkeit.

In einer Ausgestaltung des Koordinatenmessgeräts gemäß dem ersten Aspekt oder gemäß dem zweiten Aspekt kann des Weiteren vorgesehen sein, dass die Bereiche In Form von nebeneinander verlaufende Streifen ausgebildet sind.

Beispielsweise im Fall von mehreren Beleuchtungsanordnungen In dem Beleuchtungsmodul, die rotationssymmetrisch angeordnet sind, bilden die Streifen der Beleuchtungsanordnung zusammengenommen quasi Kreisbogenstücke. Beispielsweise die ersten Subaperturen der Beleuchtungsanordnungen bilden dann einen ersten unterbrochenen Beleuchtungsring, Die zweiten Subaperturen der Beleuchtungsanordnungen bilden einen zweiten unterbrochenen Ring und die dritten Subaperturen bilden einen dritten unterbrochenen Beleuchtungsring usw. Die Streifen können beispielsweise als parallel zueinander verlaufende gerade Streifen oder als konzentrische Ringbogenabschnitte ausgebildet sein.

In einer Ausgestaltung des Koordinatenmessgeräts gemäß dem ersten Aspekt oder gemäß dem zweiten Aspekt der Erfindung kann vorgesehen sein, dass mindestens einer der Bereiche mehrere Bereichssegmente aufweist, wobei die Bereichssegmente jeweils unterschiedliche Oberflächenkrümmungsverläufe aufweisen.

Auf diese Weise kann zum einen besonders einfach eine Asymmetrie des Lichtintensitätsverlaufs zwei Richtungen bereitgestellt werden, zum anderen werden so mehr Freiheiten bei der Ausgestaltung der Beleuchtung eines bestimmten Arbeitsabstands geschaffen. Beispielsweise könnte ein eine zweite Subapertur ausbildender Streifen in drei Bereichssegmente unterteilt sein. Ein Bereichssegment könnte eine im Wesentlichen divergierende Wirkung und eine diffuse Hintergrundbeleuchtung bereitstellen. Ein zweites Bereichssegment könnte dann derart in zwei Richtungen konvergierend gekrümmt sein, das im Wesentlichen ein rechteckiger Bereich verstärkt ausgeleuchtet wird. Ein drittes Bereichssegment könnte dann derart ausgestaltet sein, dass ein diesen rechteckigen Bereich umgebener im Wesentlichen kreisförmiger Bereich verstärkt ausgeleuchtet wird.

Beispielsweise kann kumulativ auch vorgesehen sein, dass ein Bereichssegment, eine ganze Subapertur oder auch das gesamte refraktive optische Element zusätzlich als Vorsatz, d.h. werkstückseltig, ein diffraktives Element oder holografisches optisches Element zur Bereitstellung einer diffusen Beleuchtung aufweist.

Es können aber auch bspw. alle Bereichssegmente konvergierend ausgestaltet sein, wobei jedes Bereichssegment eine sphärische Krümmung mit jeweils unterschiedlichen Krümmungsradien aufweist. Auch jedwede asphärische Ausgestaltungen oder Freiformflächen sind möglich.

In einer Ausgestaltung des Koordinatenmessgeräts gemäß dem ersten Aspekt oder gemäß dem zweiten Aspekt kann vorgesehen sein, dass eine Oberfläche mindestens eines der Bereiche zumindest teilweise als Freiformfläche ausgebildet ist.

Auf diese Weise besteht ein sehr großer Gestaltungsspielraum hinsichtlich der Abstrahlcharakteristik des entsprechenden Bereichs. Der Bereich kann dabei zumindest teilweise als Freiformfläche ausgebildet sein. Dies bedeutet, dass bspw. mindestens ein Bereichssegment mindestens eines Bereichs als Freiformfläche ausgebildet ist.

In einer weiteren Ausgestaltung des Koordinatenmessgeräts gemäß dem ersten Aspekt oder gemäß dem zweiten Aspekt kann vorgesehen sein, dass mindestens einer der Bereiche oder mindestens eines der Bereichssegmente eine Oberfläche aufweist, die in zwei senkrecht zueinander verlaufenden Richtungen, insbesondere verschieden, gekrümmt ist.

Auf diese Weise ist es möglich, eine Fokuslage eines entsprechenden Bereichs bzw. eines entsprechenden Bereichssegments beliebig im Raum zu wählen. Die Krümmungen können sphärisch, asphärisch oder beliebig sein. Zusätzlich kann ggf. eine gewünschte prismatische Wirkung durch Neigung der gekrümmten Fläche insgesamt erzielt werden. Die Lage des Fokus kann dabei nicht nur in ihrer Entfernung zur Beleuchtungsanordnung gewählt, sondern seitlich versetzt ausgestaltet sein. Auf diese Welse kann ein Arbeitsabstand aus einem Bereich bzw. einem Bereichssegment fokussiert beleuchtet werden oder aber, durch Nutzung einer Kaustik, divergierend beleuchtet werden. Eine derartige Kaustik verbessert die Homogenität der Lichtintensität In dem beleuchteten Bereich.

In einer Ausgestaltung des Koordinatenmessgeräts gemäß dem ersten Aspekt oder gemäß dem zweiten Aspekt kann vorgesehen sein, dass der Lichtintensitätsverlauf der mindestens einen Beleuchtungsanordnung, insbesondere in der ersten und/oder der zweiten Richtung asymmetrisch zu einer Richtung einer maximalen Lichtintensität der Beleuchtungsanordnung ist.

Auf diese Weise wird es besonders einfach, zwei oder mehr Teilbereiche innerhalb des Lichtkegels zu bilden, innerhalb derer jeweils ein gewünschter Lichtintensitätsverlauf bereitgestellt ist. Der Lichtkegel kann dann geeignet in etwa in Richtung der maximalen Lichtintensität geteilt werden, beispielsweise, wie nachfolgend noch erläutert werden wird, mittels eines Prismas, so dass über einen Lichtkegel mit den so eingestellten unterschiedlichen Lichtintensitätsverläufen dann zur Beleuchtung zweier Arbeitsbereiche bzw. Arbeitsebenen eingesetzt werden können.

In einer weiteren Ausgestaltung des Koordinatenmessgeräts gemäß dem ersten Aspekt oder gemäß dem zweiten Aspekt kann vorgesehen sein, dass die mindestens eine Beleuchtungsanordnung jeweils mindestens ein optisches Element aufweist, das die Abstrahlcharakteristik die jeweiligen Beleuchtungsanordnungen moduliert.

Dies ermöglicht die Verwendung normaler herkömmlicher Beleuchtungsanordnungen. So können herkömmliche Lichtquellen und übliche passive Elemente, wie beispielsweise Lichtleiter und dgl., verwendet werden. Besondere Lichtquellen, die bereits eine asymmetrische Abstrahlcharakteristik aufweisen, sind natürlich möglich, jedoch sind Strahler, wie beispielsweise LEDs, die eine gerichtete Abstrahlcharakteristik aufweisen, die Im Wesentlichen symmetrisch ist, kostengünstiger. Dies wird durch die Modulation mittels mindestens eines optischen Elements erzielt.

In einer weiteren Ausgestaltung des Koordinatenmessgeräts gemäß dem ersten Aspekt oder gemäß dem zweiten Aspekt kann dabei vorgesehen sein, dass die mindestens eine Beleuchtungsanordnung mindestens einen Lichtleiter aufweist, und wobei das mindestens eine optische Element an einem werkstückseitigen Ende des Lichtleiters angeordnet ist.

Auf diese Weise kann das Beleuchtungsmodul beispielsweise als ein passives Beleuchtungsmodul ausgebildet sein, das durch mindestens einen Lichtleiter das Licht auf geeignete Welse an das Werkstück heranführt. An dem werkstückseitigen Ende wird das aus dem Lichtleiter austretende Licht dann wie gewünscht moduliert.

In einer weiteren Ausgestaltung des Koordinatenmessgeräts gemäß dem ersten Aspekt oder gemäß dem zweiten Aspekt kann vorgesehen sein, dass die mindestens eine Beleuchtungsanordnung eine Lichtquelle aufweist, und wobei das mindestens eine optische Element eine Abstrahlcharakteristik der Lichtquelle moduliert.

Die Beleuchtungsanordnung kann somit auch als aktive Beleuchtungsanordnung mit einer eigenen Lichtquelle ausgestaltet sein, die insbesondere an einer Werkstückseite des Beleuchtungsmoduls angeordnet ist. Die Lichtquelle an sich kann herkömmlich ausgebildet sein, beispielsweise eine gerichtete Lichtquelle sein, die nach Art eines Lambertzschen Strahlers abstrahlt. Ein geeignetes optisches Element, das beispielsweise die Lichtquelle bedeckt, kann dann wie gewünscht die Abstrahlcharakteristik der gesamten Beleuchtungsanordnung modulieren.

In einer Ausgestaltung des Koordinatenmessgeräts gemäß dem ersten Aspekt oder gemäß dem zweiten Aspekt kann vorgesehen sein, dass die mindestens eine Lichtquelle eine LED bzw. Leuchtdiode oder eine OLED bzw. organische Leuchtdiode ist. Des Weiteren kann die Lichtquelle auch ein Laser(Light Amplification through Stimulated Emission of Radiation)-Element sein. Das abgestrahlte Licht kann Licht in einem sichtbaren Spektralbereich von etwa 380 bis 780 nm sein. Es kann aber durchaus auch Licht in einem nicht sichtbaren Spektralbereich, beispielsweise im ultravioletten Bereich oder im infraroten Bereich, sein,

In einer weiteren Ausgestaltung des Koordinatenmessgeräts gemäß dem ersten Aspekt kann vorgesehen sein, dass das mindestens eine optische Element mindestens ein refraktives optisches Element und/oder mindestens ein diffraktives optisches Element und/oder mindestens ein holographisches optisches Element und/oder mindestens ein reflektierendes optisches Element ist.

Gemäß der Erfindung kann das mindestens eine optische Element somit auf verschiedene Arten eine optische Wirkung hervorrufen. Insbesondere kann vorgesehen sein, dass ein refraktives optisches Element zum Beeinflussen der Abstrahlcharakteristik vorgesehen ist.

In einer weiteren Ausgestaltung des Koordinatenmessgeräts gemäß dem ersten Aspekt kann vorgesehen sein, dass das mindestens eine optische Element ein Prisma aufweist, das in einem Teilbereich des Abstrahlwinkels angeordnet ist.

Auf diese Weise kann konstruktiv relativ einfach ein Teil des von der Beleuchtungsanordnung emittierten Lichts "abgezweigt" werden und in einen anderen Raumbereich geleitet werden. Auf diese Weise findet quasi eine Zweiteilung des Abstrahlkegels der Beleuchtungsanordnung statt,

In einer weiteren Ausgestaltung des Koordinatenmessgeräts gemäß dem ersten Aspekt kann vorgesehen sein, dass das mindestens eine optische Element eine Meniskuslinse aufweist, die in dem gesamten Abstrahlwinkel angeordnet ist.

Beispielsweise kann dabei vorgesehen sein, dass eine der Flächen der Meniskuslinse asphärisch ausgestaltet ist, um auf diese Weise die geeignete Asymmetrie in Abstrahlcharakteristik der Beleuchtungsanordnung herzustellen. Auch eine sonstige asymmetrische Ausbildung der Menlskuslinse ist denkbar, beispielsweise eine Verkippung der vorderen und Rückfläche der Meniskuslinse nur in einem Teilbereich der Oberfläche relativ zueinander, um nur dort eine prismatische Wirkung herbeizuführen. Auch auf diese Weise kann mit einfachen Mitteln die gewünschte Abstrahlcharakteristik der Beleuchtungsanordnung eingestellt werden.

In einer weiteren Ausgestaltung des Koordinatenmessgeräts gemäß dem ersten Aspekt oder gemäß dem zweiten Aspekt der Erfindung kann vorgesehen sein, dass die Sensorseite eine erste Schnittstelleneinrichtung zum sensorseitigen Koppeln des Beleuchtungsmoduls in einer definierten Lage aufweist.

Auf diese Weise wird eine vordefinierte Anordnung des Beleuchtungsmoduls relativ zu dem optischen Sensor des Koordinatenmessgeräts ermöglicht, so dass die eingestellte Abstrahlcharakteristik zu diesem optischen Sensor erfasst und gewünschte Arbeitsebenen beleuchtet. Beispielsweise kann vorgesehen sein, dass eine Dreipunktlagerung erfolgt. Dabei ist beispielsweise eine Lagerung über Kugelpaare, Kugel-Walzenpaare oder eine Lagerung in Senkung für die erste Kugel, eine Lagerung in einer V-Nut für die zweite Kugel und eine Lagerung auf einer Fläche für die dritte Kugel vorgesehen.

In einer weiteren Ausgestaltung des Koordinatenmessgeräts gemäß dem ersten Aspekt oder gemäß dem zweiten Aspekt kann vorgesehen sein, dass der Grundkörper die Form eines Rings mit einem freien Zentralbereich und einem Randbereich aufweist, wobei die mindestens eine Beleuchtungsanordnung in dem Randbereich auf der Werkstückseite angeordnet ist.

Auf diese Weise wird ein besonders einfacher Aufbau des Beleuchtungsmoduls erreicht. Durch den freien Zentralbereich kann das Werkstück von dem optischen Sensor ungehindert beobachtet werden.

In einer weiteren Ausgestaltung des Koordinatenmessgeräts gemäß dem ersten Aspekt oder gemäß dem zweiten Aspekt kann vorgesehen sein, dass das Beleuchtungsmodul eine Mehrzahl von Beleuchtungsanordnungen aufweist, die an der Werkstückseite des Grundkörpers rotationssymmetrisch zu einer Rotationssymmetrieachse angeordnet sind, wobei jede Beleuchtungsanordnung eine Richtung maximaler Lichtintensität aufweist, und wobei die Beleuchtungsanordnungen derart ausgerichtet sind, dass sich die Richtungen maximaler Lichtintensität in einem ersten Punkt schneiden, der auf der Rotationssymmetrieachse liegt. Auf diese Weise kann eine besonders gleichmäßige Beleuchtung eines Werkstücks von allen Seiten sichergestellt werden.

Diese Ausgestaltung ist jedoch nur beispielhaft zu verstehen. Eine Rotationssymmetrie der Mehrzahl von Beleuchtungsanordnungen ist keinesfalls zwingend derart auszugestalten, dass die Richtung der maximalen Lichtintensität sich auf der Rotationssymmetrieachse schneiden. Grundsätzlich besteht hier eine Gestaltungsfreiheit. Insbesondere ist es auch möglich, die Beleuchtungsanordnungen nicht rotationssymmetrisch auf dem Grundkörper anzuordnen, sondern bspw. in einer rechteckigen, elliptischen oder völlig freien unregelmäßigen Art und Weise. Bei bestimmten Beleuchtungsanwendungen kann es gewünscht sein, derartige freie Anordnungen vorzunehmen, bspw. Im Falle einer Dunkelfeldbeleuchtung.

In einer weiteren Ausgestaltung des Koordinatenmessgeräts gemäß dem ersten Aspekt oder gemäß dem zweiten Aspekt kann vorgesehen sein, dass die Abstrahlcharakteristik jeder Beleuchtungsanordnung derart moduliert ist, dass sie einen ersten Teilbereich und mindestens einen zweiten Teilbereich aufweist. Die ersten Teilbereiche können dabei in einem ersten Arbeitsbereich zusammenfallen. Die Arbeitsbereiche der zweiten Beleuchtungsbereiche können in einem zweiten Arbeitsbereich zusammenfallen. Darüber hinaus können auch dritte oder vierte Teilbereiche vorhanden sein, die in einem dritten bzw. vierten Arbeitsbereich zusammenfallen. Auch darüber hinaus sind noch weitere Teilbereiche denkbar.

In einer weiteren Ausgestaltung des Koordinatenmessgeräts kann gemäß dem ersten Aspekt oder gemäß dem zweiten Aspekt vorgesehen sein, dass die Abstrahlcharakteristik jeder Beleuchtungsanordnung derart moduliert ist, dass sie einen ersten Teilbereich und einen zweiten Teilbereich aufweist, wobei zwischen dem ersten Teilbereich und dem zweiten Teilbereich ein Schattenbereich ist, und wobei die ersten Teilbereiche der Beleuchtungsanordnungen in einem ersten Arbeitsbereich und zweiten Teilbereiche der Beleuchtungsanordnungen in einem zweiten Arbeitsbereich zusammenfallen.

Auf diese Weise ist es möglich, zwei diskrete Arbeitsbereiche zu beleuchten. Möglicherweise störende Reflexionen aus einem dazwischen liegenden Bereich des Werkstücks werden auf diese Weise minimiert bzw, vermieden.

In einer weiteren Ausgestaltung des Koordinatenmessgeräts gemäß dem ersten Aspekt oder gemäß dem zweiten Aspekt kann vorgesehen sein, dass die Abstrahlcharakteristik jeder Beleuchtungsanordnung derart moduliert ist, dass sie einen ersten Teilbereich und einen zweiten Teilbereich aufweist, wobei sich der erste Teilbereich und der zweite Teilbereich in dem ersten Punkt berühren, wobei die ersten Teilbereiche der Beleuchtungsanordnungen in einem ersten Arbeitsbereich und die zweiten Teilbereiche der Beleuchtungsanordnungen in einem zweiten Arbeitsbereich zusammenfallen, und wobei die Abstrahlcharakteristik jeder Beleuchtungsanordnung des Weiteren derart moduliert Ist, dass eine Richtung einer maximalen Lichtintensität der Beleuchtungsanordnung den Abstrahlwinkel nicht halbiert

Auf diese Weise ist es möglich, ebenfalls zwei Arbeitsbereiche zu beleuchten. Üblicherweise ist es dann so, dass die Arbeitsbereiche unterschiedlich weit von der Beleuchtungsanordnung entfernt sind. Daher ist es vorteilhaft, die Richtung der maximalen Lichtintensität derart einzustellen, dass sie den Abstrahlwinkel nicht halbiert, Ist der Abstrahlwinkel beispielsweise 50°, wird in dem Fall die Richtung der maximalen Lichtintensität nicht genau in der Mitte liegen, so dass zu den Grenzen des Abstrahlwinkels zu allen Selten ein Winkel von 25° zwischen der Richtung der maximalen Lichtintensität und der Grenze des Abstrahlwinkels besteht. Durch eine derartige Ausrichtung der Richtung der maximalen Lichtintensität kann den unterschiedlichen Entfernungen der Arbeitsbereiche zu der Beleuchtungsanordnung Rechnung getragen werden und sichergestellt werden, dass auf gleiche Flächen in unterschiedlichen Entfernungen im Wesentlichen gleiche Leistungen einwirken, d.h. die Bestrahlungsstärke Im Wesentlichen konstant bleibt.

In einer weiteren Ausführungsform des Koordinatenmessgeräts gemäß dem ersten Aspekt oder gemäß dem zweiten Aspekt kann vorgesehen sein, dass das Beleuchtungsmodul eine Identifikationseinrichtung zum Identifizieren zumindest eines Typs des Beleuchtungsmoduls aufweist.

Dabei kann es sich sowohl um ein aktives als auch ein passives Beleuchtungsmodul handeln. Auf diese Weise wird es möglich, dass einem Koordinatenmessgerät bzw, einer Regelungseinrichtung des Koordinatenmessgeräts bekannt ist, welches bzw. welche Beleuchtungsmodule mit dem optischen Sensor gekoppelt sind. Auf diese Weise kann überprüft werden, ob das gewünschte bzw. richtige Beleuchtungsmodul angekoppelt wurde. Auch bei einem manuellen Wechsel kann auf diese Weise unmittelbar festgestellt werden, welches Beleuchtungsmodul angekoppelt wurde. Die Identifikationseinrichtung kann dabei zumindest einen Typ des Beleuchtungsmoduls mitteilen. Sie kann darüber hinaus aber auch weitere Daten des Beleuchtungsmoduls, wie beispielsweise Stand der Energieversorgung, Funktionstüchtigkeit einer oder mehrerer Beleuchtungsanordnungen usw., bereitstellen. Die Identifikationseinrichtung kann als aktive Identifikationseinrichtung, die eine eigene Energieversorgung benötigt, oder aber als passive Identifikationseinrichtung bereitgestellt sein, die keine eigene Energieversorgung benötigt. Beispielsweise kann die Identifikationseinrichtung als Permanentspeicher ausgebildet sein, aus dem die notwendigen Daten des Beleuchtungsmoduls ausgelesen werden können. Die Identifikationseinrichtung kann drahtgebunden oder aber auch drahtlos ausgeführt sein. Beispielsweise kann es sich bei der Identifikationseinrichtung auch um einen RFID-Chip handeln.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:

Fig. 1          eine Ausführungsform eines Koordinatenmessgeräts,

Fig. 2          eine Detailansicht eines mit einem Beleuchtungsmodul ausgestatteten optischen Sensors eines Koordinatenmessgeräts,

Fig. 3          eine schematische Ansicht eines mit einem optischen Sensor gekoppelten Beleuchtungsmoduls,

Fig. 4          eine schematische Querschnittsansicht entlang einer Linie IV-IV in Fig. 3,

Fig. 5a bis 5c  verschiedene Ausführungsformen eines Beleuchtungsmoduls,

Fig. 6          eine Ausführungsform einer Kaskadenkopplung mehrerer erfindungsgemäßer Beleuchtungsmodule,

Fig. 7          eine schematische Detailansicht im Bereich einer Halteeinrichtung in einem Koordinatenmessgerät,

Fig. 8          eine schematische Darstellung einer Abstrahlcharakteristik einer Beleuchtungsanordnung,

Fig. 9          eine schematische Ansicht einer Ausführungsform eines Beleuchtungsmoduls mit den Abstrahlcharakteristiken der Beleuchtungsanordnungen,

Fig. 10         eine schematische Ansicht einer weiteren Ausführungsform eines Beleuchtungsmoduls mit den Abstrahlcharakteristiken der Beleuchtungsanordnungen,

Fig. 11a        eine schematische Querschnittsansicht entlang einer Linie XI-XI in Fig. 10,

Fig. 11b bis 11d verschiedene alternative Ausgestaltungen der Darstellung der FI. 11a,

Fig. 12         eine schematische Perspektivansicht zur Veranschaulichung der Abstrahlcharakteristik eines Beleuchtungsmoduls gemäß dem ersten Aspekt,

Fig. 13         eine schematische Querschnittsansicht entlang einer Linie XIII-XIII in Fig. 9,

Fig. 14a und 14b verschiedene weitere Ausführungsformen eines Beleuchtungsmoduls,

Fig. 15         eine Ausgestaltung eines beispielhaften refraktiven optischen Elements,

Fig. 16a        eine weitere Ausgestaltung eines beispielhaften refraktiven optischen Elements,

Fig. 16b        eine schematische Querschnittsansicht entlang einer Linie B-B in Fig. 16a,

Fig. 16c        eine schematische Querschnittsansicht entlang einer Linie C-C in Fig. 16a,

Fig. 17         eine schematische Draufsicht auf Beleuchtungsbereiche in einem Arbeitsabstand,

Fig. 18         eine schematische Ansicht einer

Fig. 19a     noch eine weitere Ausgestaltung eines beispielhaften refraktiven optischen Elements,

Fig. 19b     eine schematische Querschnittsansicht entlang einer Linie D-D in Fig. 19a,

Fig. 19c     eine schematische Querschnittsansicht entlang einer Linie E-E in Fig. 19a,

Fig. 20a     eine weitere bespielhafte Ausgestaltung einer Beleuchtungsanordnung,

Fig. 20b     noch eine weitere bespielhafte Ausgestaltung einer Beleuchtungsanordnung, und

Fig. 20c     noch eine weitere bespielhafte Ausgestaltung einer Beleuchtungsanordnung.

weiteren Ausführungsform eines Beleuchtungsmoduls mit den Abstrahlcharakteristiken der Beleuchtungsanordnungen,

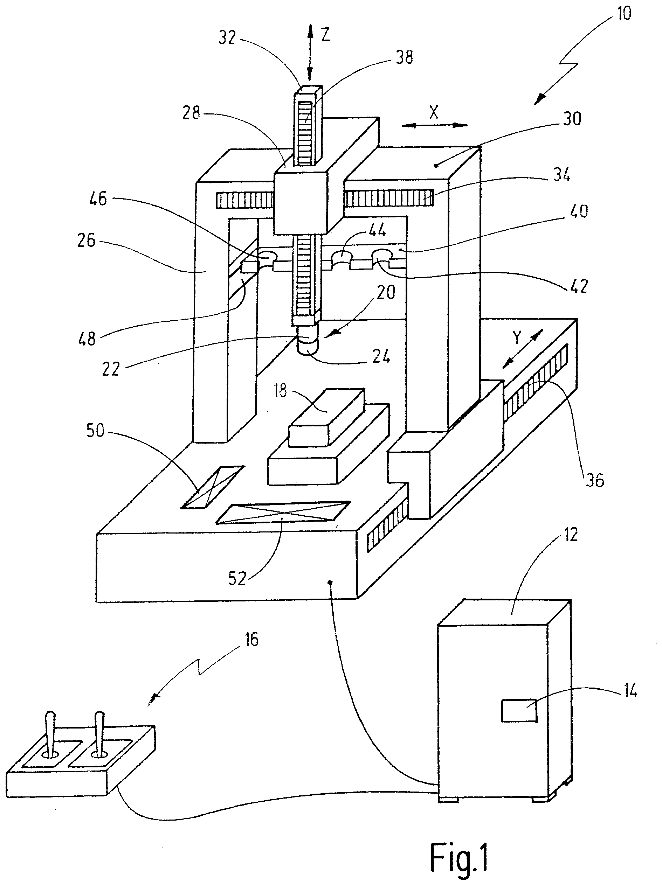

Fig. 1 zeigt eine Ausführungsform eines Metrologiesensors 10, insbesondere eines Koordinatenmessgeräts 10. Das Koordinatenmessgerät 10 weist eine Regelungseinrichtung 12 auf, die dazu ausgebildet ist, das Koordinatenmessgerät 10 automatisiert zu steuern. Hierzu kann die Regelungseinrichtung 12 eine Datenverarbeitungseinheit 14 aufweisen. Des Weiteren kann die Regelungseinrichtung 12 auch Anzeigevorrichtungen aufweisen, die einem Nutzer des Koordinatenmessgeräts 10 Informationen über angewählte Betriebsmodi, Messergebnisse usw. anzeigen. Des Weiteren weist das Koordinatenmessgerät 10 eine Bedienungseinrichtung 16 auf, die einem Nutzer ermöglicht, das Koordinatenmessgerät 10 zu steuern. Die Bedienungseinrichtung 16 ist dabei lediglich schematisch dargestellt. Dies soll zum einen ein manuelles Bewegen des Koordinatenmessgeräts 10 ermöglichen. Des Weiteren kann die Bedienungseinrichtung 16 dazu ausgebildet sein, dass der Nutzer Systemeingaben in die Regelungseinrichtung 12 eingeben kann, um einen Betriebsmodus usw. auszuwählen. Die Regelungseinrichtung 12 kann das Koordinatenmessgerät 10 des Weiteren auch automatisch regeln.

Das Koordinatenmessgerät 10 dient dazu, ein Werkstück 18 zu vermessen. Hierzu weist das Koordinatenmessgerät 10 einen optischen Sensorkopf 20 auf, der einen optischen Sensor 22 und ein Beleuchtungsmodul 24 aufweist. Das Beleuchtungsmodul 24 ist mit dem optischen Sensor 22 gekoppelt.

Um den optischen Sensorkopf 20 relativ zu dem Werkstück 18 bewegen zu können, weist das Koordinatenmessgerät in der dargestellten Ausführungsform ein Portal 26 auf, das in einer Y-Richtung bewegbar ist. Ein Schlitten 28 ist in einer X-Richtung bewegbar an einer Traverse 30 des Portals 26 gelagert. Auf diese Weise kann der optische Sensorkopf 20 durch Bewegung des Schlittens 28 auf der Traverse 30 in X-Richtung bewegt werden. In dem Schlitten 28 ist eine Pinole 32 vorgesehen, die relativ zu dem Schlitten 28 in einer Z-Richtung bewegbar ist. An der Pinole 32 ist dann der optische Sensorkopf 20 angebracht. Auf diese Weise ist es möglich, den optischen Sensorkopf 20 in allen drei Raumrichtungen X, Y und Z zu bewegen. Eine Lagerung des Portals 26 des Schlittens 28 und der Pinole 32 zueinander kann beispielsweise mittels sogenannter Luftlager ausgeführt sein. Um eine Lage des Portals 26, des Schlittens 28 und der Pinole 32 zu erfassen, kann das Koordinatenmessgerät 10 Skalen aufweisen. Beispielsweise können eine Skala 34 für die X-Richtung, eine Skala 36 für die Y-Richtung und eine Skala 38 für die Z-Richtung vorgesehen sein.

Des Weiteren kann das Koordinatenmessgerät 10 eine Halteeinrichtung 40 aufweisen. In der Halteeinrichtung 40 ist mindestens ein Magazinplatz vorgesehen, insbesondere sind mehrere Magazinplätze vorgesehen. Dargestellt sind ein erster Magazinplatz 42, ein zweiter Magazinplatz 44 und ein dritter Magazinplatz 46. Jeder der Magazinplätze 42, 44, 46 kann dazu vorgesehen sein, ein bestimmtes Beleuchtungsmodul 24 zu tragen. Ein Wechseln eines Beleuchtungsmoduls 24 kann dann beispielsweise derart automatisiert erfolgen, dass die Regelungseinrichtung 12 ein momentan gekoppeltes Beleuchtungsmodul 24 in einem der Magazinplätze 42, 44, 46 ablegt und ein weiteres Beleuchtungsmodul (nicht dargestellt) aus einem anderen der Magazinplätze 42, 44, 46 aufnimmt.

In der dargestellten Ausführungsform ist die Halteeinrichtung 40 an dem Portal 26 angebracht, so dass sich die Halteeinrichtung 40 unterhalb der Traverse 30 parallel zu der Traverse 30 in X-Richtung erstreckt. Alternativ kann beispielsweise auch vorgesehen sein, dass die Halteeinrichtung 40 direkt an der Traverse 30 angebracht ist. Durch eine entsprechende Anordnung der Halteeinrichtung 40 können Verfahrwege zum Wechseln eines Beleuchtungsmoduls 24 besonders kurz gehalten werden. Wie jedoch aus der dargestellten Ansicht ersichtlich ist, besteht in der dargestellten Anordnung zunächst keinerlei Möglichkeit, den optischen Sensor 22 und die Halteeinrichtung 40 in Y-Richtung relativ zueinander zu verfahren. Daher ist die Halteeinrichtung 40 in der dargestellten Ausführungsform auf einem Schlitten 48 in dem Portal 26 gelagert, so dass ein relatives Bewegen der Halteeinrichtung 40 zu dem optischen Sensor 22 in Y-Richtung möglich wird. Dabei wird die Halteeinrichtung 40 in Y-Richtung relativ zu dem Portal 26 des Schlittens 48 bewegt.

Selbstverständlich sind darüber hinaus alternative Anordnungen der Halteeinrichtung 40 denkbar. Beispielsweise ist es möglich, dass an schematisch angedeuteten Aufstellungsorten 50, 52 die Halteeinrichtung 40 positioniert wird. Sie steht dann frei in dem Koordinatenmessgerät 10. Die Magazinplätze 42, 44, 46 können dann frei von dem optischen Sensor 22 angefahren werden, um ein Beleuchtungsmodul 24 abzulegen oder aufzunehmen.

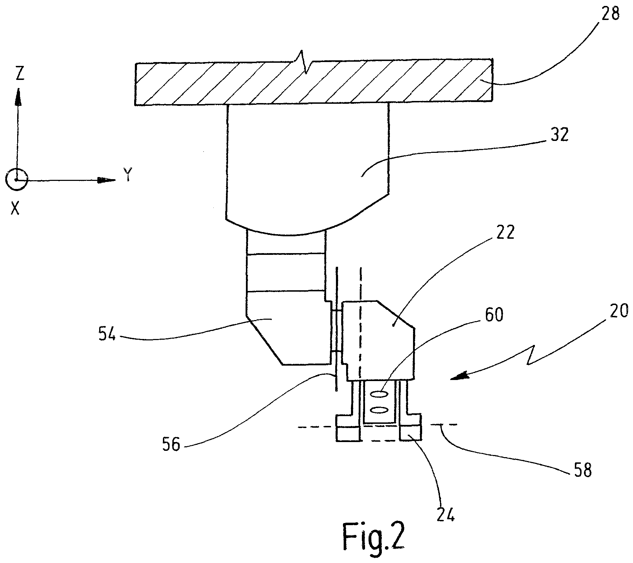

Fig. 2 zeigt eine schematische Detailansicht eines Teils des Koordinatenmessgeräts 10. Schematisch sind erneut der Schlitten 28 und die Pinole 32 dargestellt. Wie Fig. 2 zu entnehmen ist, kann an der Pinole 32 beispielsweise eine sogenannte Drehschwenkeinheit 54 angeordnet sein, die ein Drehen des optischen Sensors 22 um zwei Achsen ermöglicht, insbesondere in der dargestellten Ausführungsform beispielsweise sowohl um die Z-Richtung als auch die Y-Richtung. Auf diese Weise kann der optische Sensor 22 in einer Vielzahl von Richtungen ausgerichtet werden, um das Werkstück 18 aus einem gewünschten Betrachtungswinkel zu betrachten. Verschiedene Systemkomponenten sind dabei über Wechselflächen 56 gekoppelt, beispielsweise ist mittels einer Wechselfläche 56 der optische Sensor 22 mit der Drehschwenkeinheit 54 gekoppelt. Über die Wechselfläche 56 hinweg werden elektrische Versorgungsleitungen, Kommunikationsschnittstellen, optische Schnittstellen usw. bereitgestellt, um den optischen Sensor 22 zum einen mit Energie zu versorgen und zum anderen das Werkstück 18 anstrahlen zu können. Des Weiteren werden die von dem optischen Sensor 22 erfassten Daten über die Wechselfläche 56 und die dort bereitgestellten Schnittstellen hinweg zu der der Regelungseinrichtung 12 und ihrer Datenverarbeitungseinheit 14 geleitet.

An dem optischen Sensor 22 ist entlang einer ersten Schnittstelleneinrichtung 58 das Beleuchtungsmodul 24 gekoppelt. Das Beleuchtungsmodul 24 weist in der dargestellten Ausführungsform die Form eines kreisförmigen Rings auf. Darüber hinaus weist der optische Sensor 22 noch eine Abbildungsoptik 60 auf, die dazu dient, von einem Werkstück 18 empfangene Lichtstrahlung auf den optischen Sensor 22 abzubilden.

Die Ausgestaltung des Beleuchtungsmoduls 24 wird im Folgenden im Hinblick auf die weiteren Figuren erläutert.

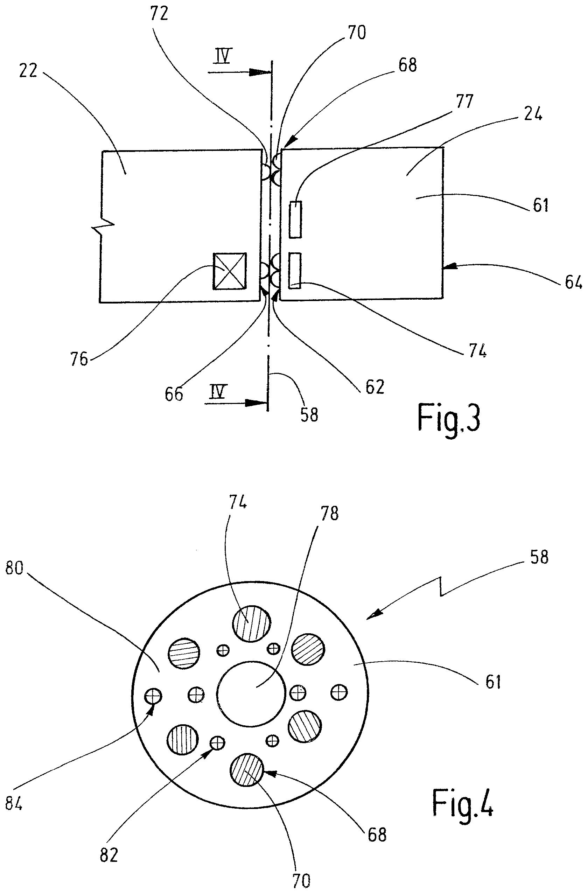

In Fig. 3 ist schematisch das Beleuchtungsmodul 24 dargestellt, das mit dem optischen Sensor 22 gekoppelt ist.

Das Beleuchtungsmodul 24 weist einen Grundkörper 61 auf. Der Grundkörper 61 wiederum weist eine Sensorseite 62 auf, die dem optischen Sensor 22 zugewandt ist. Gegenüberliegend zu der Sensorseite 62 weist der Grundkörper 61 eine Werkstückseite 64 auf, die im Betrieb dem Werkstück 18 zugewandt ist.

Der Sensorseite 62 des Grundkörpers 61 liegt im gekoppelten Zustand eine Kopplungsseite 66 des Sensors 22 gegenüber.

Zum Koppeln der Kopplungsseite 66 des optischen Sensors 22 und der Sensorseite 62 des Grundkörpers 61 ist eine Dreipunktlagerung 68 vorgesehen.

Eine solche Dreipunktlagerung ist dem Durchschnittsfachmann grundsätzlich bekannt und dient dazu, das Beleuchtungsmodul 24 in eindeutiger Lage mit dem optischen Sensor 62 zu koppeln. Hierzu sind Dreipunktlagerelemente 68 an der Sensorseite 62 des Beleuchtungsmoduls 24 und Dreipunktlagerelemente 72 an der Kopplungsseite 66 des optischen Sensors 22 vorgesehen. Dabei ist beispielsweise eine Lagerung über Kugelpaare, Kugel-Walzenpaare oder eine Lagerung in Senkung für die erste Kugel, eine Lagerung in einer V-Nut für die zweite Kugel und eine Lagerung auf einer Fläche für die dritte Kugel der Dreipunktlagerung vorgesehen.

Um eine notwendige Haltekraft aufzubringen, die das Beleuchtungsmodul 24 und den optischen Sensor 22 zusammenhält, kann vorgesehen sein, dass in dem Grundkörper 61 ein Permanentmagnet 74 vorgesehen ist. Der Permanentmagnet 74 ist dabei derart angeordnet, dass sich die Magnetfeldlinien über die erste Schnittstelleneinrichtung 58 hinweg durch den optischen Sensor 22 erstrecken, so dass eine geeignete Haltekraft zwischen dem Beleuchtungsmodul 24 und dem optischen Sensor 22 bereitgestellt ist. Natürlich müssen sich die Magnetfeldlinien dabei durch einen ferromagnetischen Werkstoff in dem optischen Sensor 22 erstrecken. Auch kann ein weiterer Permanentmagnet oder ein Elektromagnet (nicht dargestellt) in dem optischen Sensor vorhanden sein, um zusammen mit dem Permanentmagneten 74 die erforderliche Haltekraft aufzubringen. Selbstverständlich kann darüber hinaus auch vorgesehen sein, dass zusätzliche Permanentmagneten sowohl in dem Beleuchtungsmodul 24 und/oder in dem optischen Sensor 22 vorgesehen sind. Selbstverständlich kann auch vorgesehen sein, dass der Permanentmagnet 74 nur in dem optischen Sensor 22 vorgesehen ist.

Des Weiteren kann vorgesehen sein, dass der optische Sensor 22 einen Elektromagneten 76 aufweist, der schaltbar ist. Dieser ist dabei derart ausgestaltet, dass er ein von dem Permanentmagnet 74 aufgebrachtes Magnetfeld zumindest teilweise neutralisiert, so dass das Beleuchtungsmodul 24 einfacher von dem optischen Sensor 22 getrennt werden kann. Selbstverständlich kann auch vorgesehen sein, dass einer oder mehrere Elektromagneten in dem Beleuchtungsmodul 24 angeordnet sind. Um die Notwendigkeit einer Energieversorgung des Beleuchtungsmoduls 24 zu vermeiden, wird der Elektromagnet in der Regel in dem optischen Sensor 22 vorgesehen sein.

Des Weiteren kann in dem Beleuchtungsmodul 24 aber auch eine Energieempfangseinrichtung 77 vorgesehen sein, die entweder drahtlos oder drahtgebunden über die erste Schnittstelleneinrichtung 58 hinweg mit dem optischen Sensor 22 derart gekoppelt ist, dass das Beleuchtungsmodul 24 mit einer Energieversorgung versehen ist.

Fig. 4 zeigt eine Querschnittsansicht entlang einer Linie IV-IV in Fig. 3.

Wie in dem Querschnitt in Fig. 4 zu erkennen ist, weist der Grundkörper 61 die Form eines kreisförmigen Rings auf. Mit anderen Worten hat der Grundkörper 61 im Wesentlichen die Form eines Zylinders mit einer zentralen Aussparung. Insofern weist der Grundkörper 61 des Beleuchtungsmoduls 24 einen freien Zentralbereich 78 auf, der die Aussparung bildet. Des Weiteren weist der Grundkörper 61 einen Randbereich 80 auf. Der Randbereich 80 weist dann die erste Schnittstelleneinrichtung 58 mit in der dargestellten Ausführungsform beispielsweise drei Permanentmagneten 74, sowie weiteren optischen Schnittstellen 82, um Licht von der optischen Sensor 22 in das Beleuchtungsmodul 24 zu leiten, und elektrischen Schnittstellen 84 zur Energieversorgung des Beleuchtungsmoduls 24 auf. Die Darstellung der Dreipunktlagerung erfolgt in der Fig. 4 und den folgenden Figuren dabei lediglich schematisiert.

Selbstverständlich ist die in Fig. 4 dargestellte Ausführungsform lediglich beispielhaft zu verstehen. Beispielsweise kann auch ein lediglich passive Beleuchtungsanordnungen aufweisendes Beleuchtungsmodul 24 keinerlei elektrische Schnittstellen 84 in dem Randbereich 80 aufweisen. Darüber hinaus ist es möglich, dass ein lediglich aktive Beleuchtungsanordnungen aufweisendes Beleuchtungsmodul 24 keinerlei optische Schnittstellen 82 in dem Randbereich 80 aufweist.

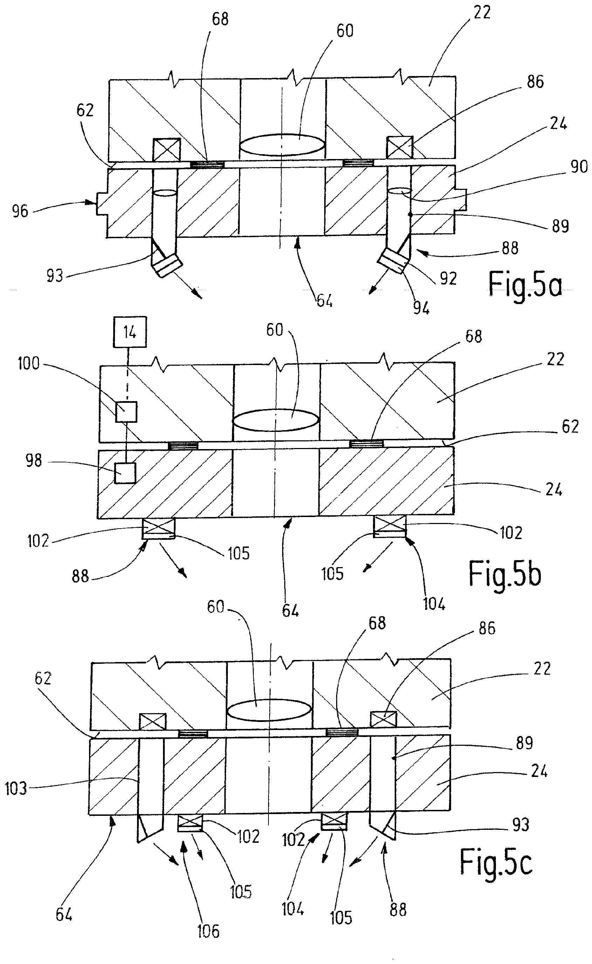

In Fig. 5a ist eine erste Ausführungsform eines Beleuchtungsmoduls 24 beispielhaft dargestellt. Gleiche Elemente sind mit gleichen Bezugszeichen gekennzeichnet und werden im Folgenden nicht erneut erläutert.

In der dargestellten Ausführungsform weist der optische Sensor 22 zumindest eine Lichtquelle 86 auf. In der dargestellten Ausführungsform ist die Lichtquelle 86 beispielsweise ringförmig ausgebildet, d.h. sie weist ein ringförmiges, Licht emittierendes Element auf. Die Lichtquelle 86 kann aber beispielsweise auch als eine Mehrzahl von punktförmigen Lichtquellen, beispielsweise LEDs oder OLEDs oder Laser ausgebildet sein, die ringförmig angeordnet sind.

Das Beleuchtungsmodul 24 weist eine Beleuchtungsanordnung 88 auf. Die Beleuchtungsanordnung 88 ist lediglich passiv ausgebildet. Die Beleuchtungsanordnung 88 weist daher einen ringförmigen Lichtleiter 89 auf und kann darüber hinaus refraktive optische Elemente 90, diffraktive optische Elemente 92, reflektierende optische Elemente 93 und/oder holografische optische Elemente 94 aufweisen. Dies muss jedoch nicht der Fall sein. Beliebige Kombinationen derartiger optischer Elemente sind denkbar, um eine gewünschte Beleuchtung mittels der Beleuchtungsanordnung 88 bereitzustellen. Des Weiteren sind statt eines ringförmigen Lichtleiters 89 natürlich auch mehrere, rotationssymmetrisch oder kreisförmig angeordnete Beleuchtungsanordnungen denkbar, die Beleuchtungsanordnungen können dabei aktiv oder passiv sein. Das von der Lichtquelle 86 emittierte Licht wird in den Lichtleiter 89 eingekoppelt, durch das Beleuchtungsmodul 24 geleitet und auf gewünschte Weise abgelenkt, so dass letztendlich eine geeignete Beleuchtung des Werkstücks 18 mittels des Beleuchtungsmoduls 24 bereitgestellt ist. Darüber hinaus weist das Beleuchtungsmodul 24 eine Wechselschnittstelleneinrichtung 96 auf, die in der dargestellten Ausführungsform als umlaufender Vorsprung ausgebildet ist. Der umlaufende Vorsprung kann dann beispielsweise mit einer umlaufenden Nut in einem Magazinplatz 42, 44, 46 der Halteeinrichtung 40 zusammenwirken, so dass beispielsweise dann das Beleuchtungsmodul 24 in einen solchen Magazinplatz eingeschoben werden kann. Eines oder mehrere der optischen Elemente 90, 92, 93, 94 kann eine Abstrahlcharakteristik der jeweiligen Beleuchtungsanordnung 88 derart ändern, dass der Lichtintensitätsverlauf innerhalb eines Abstrahlwinkels der jeweiligen Beleuchtungsanordnung asymmetrisch ist.

In der Fig. 5b ist eine weitere Ausführungsform eines Beleuchtungsmoduls 24 dargestellt. Gleiche Elemente sind erneut mit gleichen Bezugzeichen gekennzeichnet. Es wird daher nur auf die Unterschiede eingegangen.

Das Beleuchtungsmodul 24 weist eine Identifikationseinrichtung 98 auf, die von einer Identifikationsleseeinrichtung 100 ausgelesen werden kann. Das Auslesen kann dabei drahtgebunden oder aber drahtlos erfolgen. Die Identifikationsleseeinrichtung 100 kann in dem optischen Sensor 22 angeordnet sein. Sie kann aber auch in jedem anderen Element des Koordinatenmessgeräts 10 angeordnet sein. Sie kann auch direkt Teil der Regelungseinrichtung 12 bzw. der Datenverarbeitungseinheit 14 sein. Auf diese Weise ist es möglich, das Beleuchtungsmodul 24 eindeutig zu identifizieren und diese Information der Regelungseinrichtung 12 bereitzustellen. Dies dient zum einen dazu, das gekoppelte Beleuchtungsmodul 24 und dessen Beleuchtungsart zu identifizieren, zum anderen können beispielsweise auch Dimensionen des Beleuchtungsmoduls 24 in der Identifikationseinrichtung 98 hinterlegt sein und ausgelesen werden, um auf diese Weise ein kollisionsfreies Regeln einer Bewegung des mit dem Beleuchtungsmodul 24 gekoppelten optischen Sensors 22 zu ermöglichen.

In der dargestellten Ausführungsform ist das Beleuchtungsmodul 24 als sogenanntes aktives Beleuchtungsmodul ausgestaltet. Es weist zwei Lichtquellen 102 auf. Jede Lichtquelle 102 bildet eine Beleuchtungsanordnung aus, so dass das Beleuchtungsmodul 24 in Fig. 5b zwei Beleuchtungsanordnungen 88, 104 aufweist. Jede der Beleuchtungsanordnungen weist dabei ein optisches Element 105 auf, das eine Abstrahlcharakteristik der jeweiligen Lichtquelle 102 derart ändert, dass der Lichtintensitätsverlauf innerhalb eines Abstrahlwinkels der jeweiligen Lichtquelle 102 asymmetrisch ist.

Insbesondere kann die Lichtquelle 102 in energiesparender LED/OLED-Technik oder als Laser ausgeführt sein. Die Lichtquellen 102 können zum Beispiel in Gruppen, getrennt nach Farben, in einem Dauerstrichoder in einem Pulsbetrieb genutzt werden. Wenn viele unterschiedliche Lichtquellen genutzt werden sollen, so ist es vorteilhaft, eine Steuerungseinrichtung direkt in dem Beleuchtungsmodul 24 vorzusehen. Entsprechend ist über die erste Schnittstelleneinrichtung 58 eine elektrische Schnittstelle zur Versorgung einer solchen Steuerungseinrichtung mit Energie und Steuersignalen vorzusehen. Die Versorgung mit elektrischer Energie kann dabei drahtlos oder drahtgebunden ausgeführt sein. Insbesondere kann des Weiteren vorgesehen sein, dass eine Energieversorgung für eine Steuerungseinrichtung und eine Energieversorgung für die Lichtquellen 102 getrennt voneinander ausgeführt sind.

In Fig. 5c ist noch eine weitere Ausführungsform eines Beleuchtungsmoduls 24 dargestellt. Das Beleuchtungsmodul 24 in der Fig. 5c weist kombiniert sowohl aktive als auch passive Beleuchtungsanordnungen 88, 104 und 106 auf. Im dargestellten Beispiel ist etwa die Beleuchtungsanordnung 88 ein kreisförmiges Ringlicht, das lediglich mittels zweier Lichtleiter 89, 103 und reflektierender optischer Elemente 93 Licht, das von einer Lichtquelle 86 des optischen Sensors 22 emittiert wird, durch das Beleuchtungsmodul 24 leitet und wie gewünscht auf das Werkstück 18 reflektiert. Darüber hinaus sind unterstützend zwei Beleuchtungsanordnungen 104 und 106 vorgesehen, die jeweils als aktiv Licht emittierenden Lichtquellen 102 bereitgestellt sind.

Das Beleuchtungsmodul 24 kann somit entweder passive Beleuchtungsanordnungen 88, 104, 106, aktive Beleuchtungsanordnungen 88, 104, 106 oder sowohl aktive als auch passive Beleuchtungsanordnungen 88, 104, 106 aufweisen. Bei mindestens einer der Beleuchtungsanordnungen 88, 104, 106 ist mittels der optischen Elemente 90, 92, 93, 94, 105 eine Abstrahlcharakteristik der jeweiligen Beleuchtungsanordnungen 88, 104, 106 derart geändert, dass der Lichtintensitätsverlauf innerhalb eines Abstrahlwinkels der jeweiligen Beleuchtungsanordnungen 88, 104, 106 asymmetrisch ist.

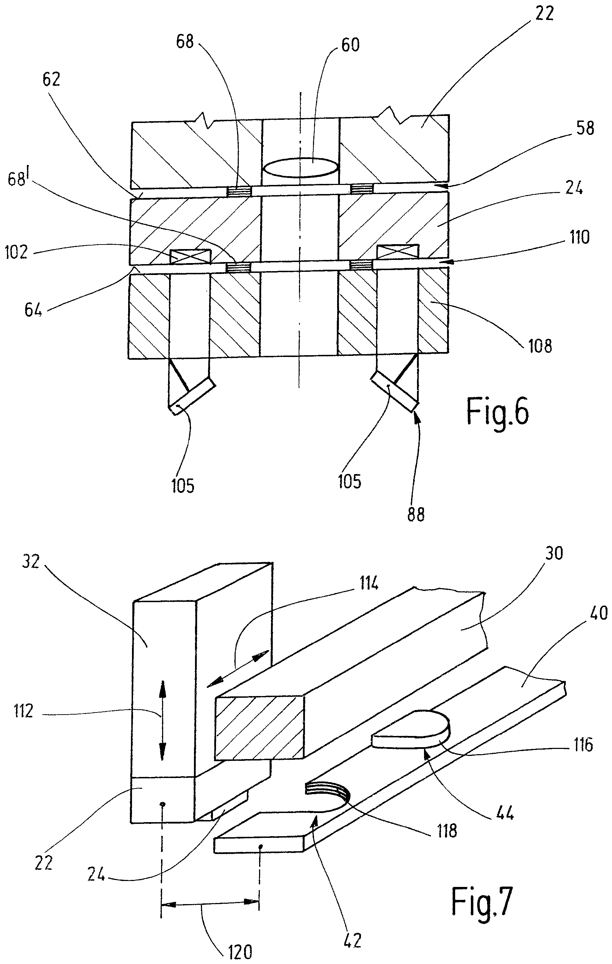

In der Fig. 6 ist noch eine weitere Ausführungsform eines Beleuchtungsmoduls 24 dargestellt. Das dort dargestellte Beleuchtungsmodul 24 weist sowohl auf der Sensorseite 62 eine erste Schnittstellenanordnung 58 auf, die das Beleuchtungsmodul 24 mit dem optischen Sensor 22 koppelt. Das Beleuchtungsmodul 24 weist darüber hinaus auf seiner Werkstückseite 64 eine zweite Schnittstellenanordnung 110 auf, die zum Ankoppeln eines zweiten Beleuchtungsmoduls 108 an das Beleuchtungsmodul 24 dient. Die zweite Schnittstelleneinrichtung 110 kann dabei wie die erste Schnittstelleneinrichtung 58 ausgebildet sein, um eine möglichst volle Kompatibilität der Beleuchtungsmodule 24, 108 hinsichtlich ihrer Kopplung miteinander und mit dem optischen Sensor 22 zu ermöglichen. Dies muss jedoch nicht zwingend der Fall sein. Es kann auch vorgesehen sein, dass die zweite Schnittstelleneinrichtung 110 eine andere Ausgestaltung als die Schnittstelleneinrichtung 58 aufweist.

Mittels dieser kaskadenartigen Kopplung mehrerer Beleuchtungsmodule 24, 108 kann insbesondere die insgesamt in einem Koordinatenmessgerät 10 vorgesehene Anzahl von Beleuchtungsmodulen 24, 108 minimiert werden. Insbesondere kann beispielsweise vorgesehen sein, dass eine Kopplung zweier Beleuchtungsmodule 24, 108 eine Beleuchtungsart bereitstellt, für die ansonsten ein separates Beleuchtungsmodul vorzusehen gewesen wäre. So wird eine besonders große Flexibilität beim Einsatz der Beleuchtungsmodule 24, 108 bereitgestellt.

In Fig. 7 ist schematisch ein Ausschnitt des Koordinatenmessgeräts 10 dargestellt, der Verfahrbewegungen zum Wechseln der Beleuchtungsmodule 24 aufweist. Die Elemente sind dabei lediglich schematisch angedeutet und mit denselben Bezugszeichen wie in den übrigen Figuren gekennzeichnet.

Die Pinole 32 ist in der dargestellten Ausführungsform an der Traverse 30 angelenkt und relativ zu dieser in Z-Richtung 112 und in X-Richtung 114 bewegbar.

Schematisch ist des Weiteren dargestellt, dass an einem ersten Magazinplatz 42 die Halteeinrichtung 40 eine umlaufende Nut 118 aufweist, in die beispielsweise eine Wechselschnittstelleneinrichtung 96, wie sie in der Fig. 5a dargestellt ist, eingreifen kann. In dem zweiten Magazinplatz 44 ist ein weiteres Beleuchtungsmodul 116 angeordnet. Ein bereits an den optischen Sensor 22 angekoppeltes Beleuchtungsmodul 24 kann durch Bewegung der Pinole 32 relativ zu der Traverse 30 in die Richtung 112, 114 in eine Position gebracht werden, in der lediglich nur noch eine transversale Bewegung 120 der Pinole 32 und der Halteeinrichtung 40 relativ zueinander zu erfolgen hat, um das Beleuchtungsmodul 24 beispielsweise in den Magazinplatz 42 einzufahren. Die relative Bewegung kann entweder dadurch ausgeführt werden, dass die Halteeinrichtung 40 beispielsweise mittels des Schlittens 48 relativ zu der Pinole 32 bewegt wird. Wenn die Halteeinrichtung 40 aber beispielsweise an einem Aufstellort 50, 52 vorgesehen ist, kann dies auch durch eine entsprechende Bewegung des optischen Sensors 22 erfolgen, während die Halteeinrichtung 40 feststeht.

Das Beleuchtungsmodul 24 befindet sich dann in dem Magazinplatz 42, wobei die Wechselschnittstelleneinrichtung 96 mit der Nut 118 ineinandergreift. Durch Bewegen der Pinole 32 in der Z-Richtung 112 kann dann eine geeignete große Kraft aufgebracht werden, so dass die Haltekraft von den Permanentmagneten 74 überwunden wird und so das Beleuchtungsmodul 24 von dem optischen Sensor 22 "abreißt". Dabei kann des Weiteren auch vorgesehen sein, dass ein beispielsweise vorgesehener schaltbarer Elektromagnet 76 geschaltet wird, der eine Haltekraft des Permanentmagneten 74 zumindest teilweise neutralisiert.

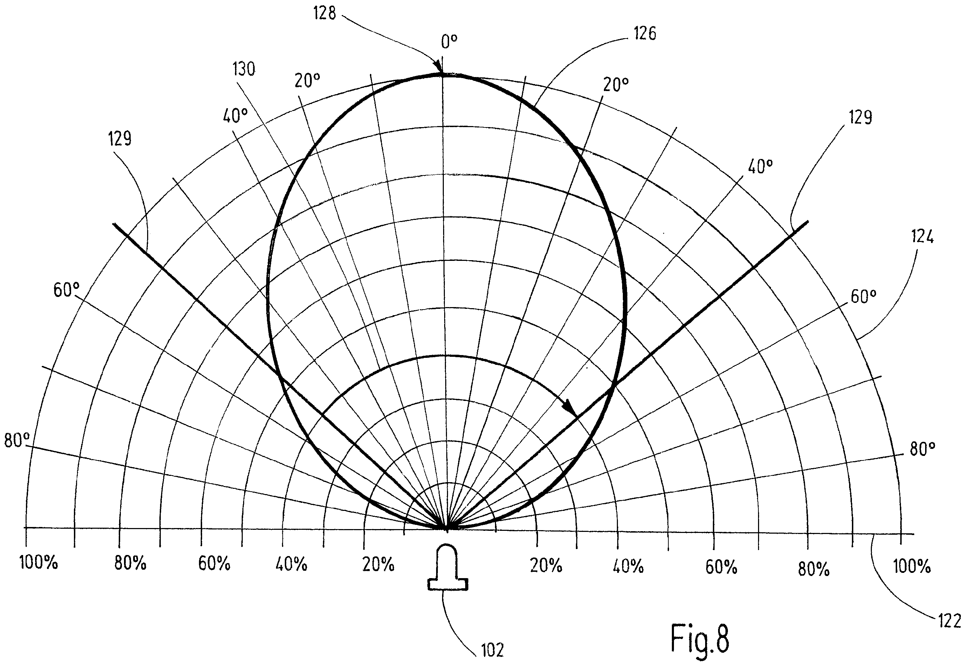

Fig. 8 zeigt eine schematische Darstellung, in der eine übliche Abstrahlcharakteristik einer Lichtquelle 102 gezeigt ist. Die in der Fig. 8 dargestellte Abstrahlcharakteristik ist in der Darstellung symmetrisch ausgebildet. Sie ist also noch nicht dahingehend moduliert, dass sie asymmetrisch ist. Zu Darstellungszwecken eignet sich jedoch gerade die symmetrische Darstellung.

Aufgetragen ist die Verteilung einer Lichtintensität 122 über einen Winkelverlauf 124 von insgesamt 180°. Bei der Lichtquelle 102 handelt es sich um eine gerichtete Lichtquelle, beispielsweise eine LED. Gerade nach vorne, d.h. in einem Winkel von 0°, weist die Lichtquelle die Richtung der maximalen Lichtintensität 128 auf. Die weitere Verteilung der Lichtintensität über die Winkel ist mit einer Linie 126 dargestellt. Sie nimmt sukzessive ab und ist bei einem Winkel von ± 90° letztendlich 0. Daraus ergibt sich der dargestellte charakteristische ovale Verlauf für die Verteilung der Lichtintensität. Als Abstrahlwinkel wird nun derjenige Winkel bezeichnet, der zwischen den Linien liegt, die die Raumrichtungen beschreiben, in denen noch eine Lichtintensität von 50 % vorliegt. Diese Linien sind mit dem Bezugszeichen 129 bezeichnet. Im dargestellten Beispiel liegen sie bei ± 50°. Ein Abstrahlwinkel 130 würde in diesem Fall folglich 100° betragen. Der Verlauf der Lichtintensität innerhalb dieses Abstrahlwinkels ist nun erfindungsgemäß gerade so moduliert, dass er nicht wie im dargestellten Beispiel symmetrisch ist, sondern innerhalb dieses Abstrahlwinkels asymmetrisch verläuft. Insbesondere ist der asymmetrisch zu der Richtung der maximalen Lichtstärke 128 ausgebildet. Beispiele hierfür werden im Folgenden erläutert.

Fig. 9 zeigt eine schematische Darstellung eines Beleuchtungsmoduls 24, das beispielhaft zwei aktive Lichtquellen 102 in der Form von LEDs aufweist. Das Beleuchtungsmodul 24 ist zur Anbringung in einem Koordinatenmessgerät 10 vorgesehen. Ein entsprechender optischer Sensor 22 des Koordinatenmessgeräts 10 weist einen Messkegel, insbesondere einen Messzylinder, 132 auf. Unter dem Messkegel bzw. Messzylinder 132 wird dabei der Raumbereich verstanden, auf den der optische Sensor 22 ausgerichtet ist. Die Lichtquellen 102 der Beleuchtungsanordnungen sind rotationssymmetrisch zu einer Rotationssymmetrieachse 134 angeordnet. Der optische Sensor 22 ist koaxial zu dieser Rotationssymmetrieachse 134 ausgerichtet.

Die Abstrahlcharakteristik jeder Beleuchtungsanordnung 102 ist jeweils mittels eines Prismas 136 moduliert. Grundsätzlich sind die Lichtquellen 102 derart ausgerichtet, dass die Raumrichtungen, in denen eine maximale Lichtintensität 128 vorliegt, in einem ersten Punkt 135 schneiden. Dieser erste Punkt 135 liegt in etwa auf der Rotationssymmetrieachse 134. Mittels des Prismas kann erreicht werden, dass ein Teil des in Fig. 8 schematisch dargestellten Lichtintensitätskegels quasi um einen gewissen Winkelgrad abgeklappt wird. Beispielsweise kann vorgesehen sein, dass versucht wird, in etwa im Bereich der maximalen Lichtintensität eine Teilung der Abstrahlcharakteristik herbeizuführen. Natürlich ist es nicht möglich, quasi die Richtung der maximalen Lichtintensität zu zerteilen. Es wird daher immer genau eine Raumrichtung geben, in der die maximale Lichtintensität vorliegt, diese ist mit dem Bezugszeichen 128 bezeichnet. Schematisch ist in der Figur nur des Weiteren eine Raumrichtung dargestellt, in der nahezu diese maximale Lichtintensität erreicht wird innerhalb des anderen, nicht weggeklappten Bereichs, dieser ist mit dem Bezugszeichen 128' gekennzeichnet. Zu der Raumrichtung mit der maximalen Lichtintensität 128 ist die Abstrahlcharakteristik innerhalb des Abstrahlwinkels daher asymmetrisch.

Gezielt wird somit ein erster Teilbereich 152 und ein zweiter Teilbereich 154 erzeugt. Zwischen diesen Teilbereichen 152, 154 weist jede Beleuchtungsanordnung 88 dann einen Schattenbereich 142 auf. In diesem Bereich strahlt sie kein Licht bzw. deutlich weniger Licht ab. Durch die rotationssymmetrische Anordnung der Lichtquellen 102 entsteht dann das in der Fig. 9 dargestellte Beleuchtungsmuster. Die ersten Teilbereiche 152 schneiden sich allesamt in einem ersten Arbeitsbereich 138. Die zweiten Teilbereiche schneiden sich allesamt in einem zweiten Arbeitsbereich 140. In diesem ersten Arbeitsbereich 138 und zweiten Arbeitsbereich 140 fallen die Lichtintensitäten aller Beleuchtungsanordnungen bzw. Lichtquellen 102 zusammen. Zwischen den Arbeitsbereichen 138, 140 liegt ein Schattenbereich 142, der nicht beleuchtet ist bzw. nicht homogen beleuchtet ist. Auf diese Weise wird ein erster Arbeitsabstand 144 und ein zweiter, für den optischen Sensor 22 weiter entfernter Arbeitsbereich 146 beleuchtet. Der erste Arbeitsabstand 144 und der zweite Arbeitsabstand 146 werden dabei gleichzeitig beleuchtet. Es ist somit möglich, ohne einen Austausch- oder Umschaltvorgang des Beleuchtungsmoduls 24 mittels des optischen Sensors 22 in diesen beiden Arbeitsabständen 144, 146 zu messen.

In der Fig. 10 ist eine weitere Ausgestaltung eines Beleuchtungsmoduls und die damit zusammenhängenden Abstrahlcharakteristiken der Beleuchtungsanordnungen bzw. Lichtquellen 102 dargestellt. Gleiche Elemente sind mit gleichen Bezugszeichen gekennzeichnet und werden im Folgenden nicht erneut erläutert. Im Folgenden wird lediglich auf die Unterschiede eingegangen.

In der dargestellten Ausgestaltung ist die Abstrahlcharakteristik jeder Lichtquelle 102 mittels einer Meniskuslinse 150 moduliert. Die Flächen der Meniskuslinse sind derart ausgestaltet, dass in dem zweiten Teilbereich 154 der Abstrahlcharakteristik jeder Lichtquelle 102 eine Zerstreuung auftritt. Damit tritt wiederum eine Asymmetrie in der Abstrahlcharakteristik auf. Der erste Teilbereich 152 nimmt lediglich einen relativ kleinen Raumwinkel ein, der zweite Teilbereich 154 nimmt einen relativ großen Raumwinkel ein. Selbstverständlich kann dieses auch gerade andersherum ausgestaltet werden.

Bei einer derartigen Ausgestaltung berühren sich der erste Arbeitsbereich 138 und der zweite Arbeitsbereich 140 in dem ersten Punkt 135. Auf diese Weise kann ein relativ kleiner erster Arbeitsbereich 138 mit einem ersten Arbeitsabstand 144 eingestellt werden, an den sich ein relativ großer zweiter Arbeitsbereich 140 anschließt. Der zweite Arbeitsbereich weist trotz allem noch Lichtintensitäten von mehr als 50 % auf. Damit können noch bis zu einem zweiten Arbeitsabstand 146 Messungen durchgeführt werden. Darüber hinaus ergibt sich zwischen dem ersten Arbeitsabstand 144 und dem zweiten Arbeitsabstand 146 ein Zwischenbereich 148, in dem ebenfalls gearbeitet werden kann. So ist ein kontinuierlicher Entfernungsübergang zwischen dem ersten Arbeitsabstand 144 und dem zweiten Arbeitsabstand 146 möglich. Somit ist das Arbeiten über einen relativ großen Abstandsbereich mittels des optischen Sensors 220 möglich.

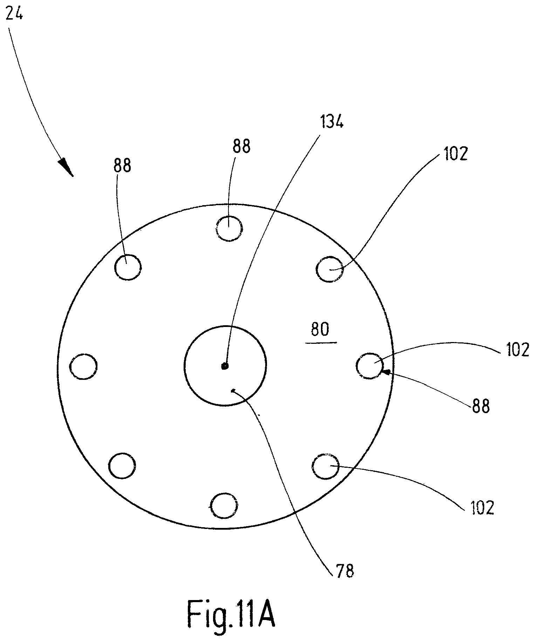

In der Fig. 11a ist letztlich erläuternd eine Querschnittsansicht entlang einer Linie XI-XI in Fig. 10 dargestellt. Zu erkennen ist die rotationssymmetrische Anordnung der Lichtquellen 102 der Beleuchtungsanordnungen 88 rotationssymmetrisch zu der Rotationssymmetrieachse 134. Die Lichtquellen 102 sind dabei in dem Randbereich 80 angeordnet. Der optische Sensor 22 kann das Werkstück dabei durch den freien Mittenbereich 78 beobachten.

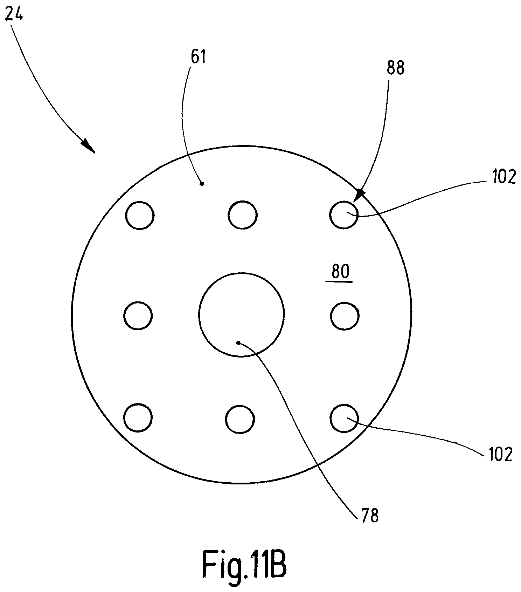

Die Figuren 11b bis 11d zeigen alternative Ausgestaltungen des in der Fig. 11a dargestellten Querschnitts, die für die Beleuchtungsmodule 24 ebenfalls möglich sind. So zeigt bspw. die Fig. 11b ein Beleuchtungsmodul mit einer kreisförmigen Ringform, wobei die einzelnen Beleuchtungsanordnungen 88 bzw. die dazugehörigen Lichtquellen 102 insgesamt in einer rechteckigen Form angeordnet sind, so dass insgesamt keine Rotationssymmetrie der Beleuchtungsanordnungen 88 um die Rotationssymmetrieachse 134 des Beleuchtungsmoduls 24 bzw. dessen Grundkörper 61 gegeben ist.

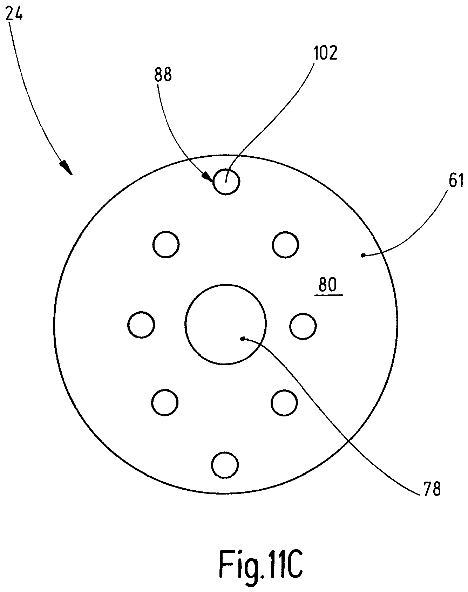

Die Fig. 11c zeigt eine weitere Möglichkeit der Ausgestaltung der Anordnungen der Beleuchtungsanordnungen 88. In den in Fig. 11c dargestellten Ausführungsbeispiele sind diese im Wesentlichen in elliptischer Anordnung an dem Grundkörper 61 vorgesehen.

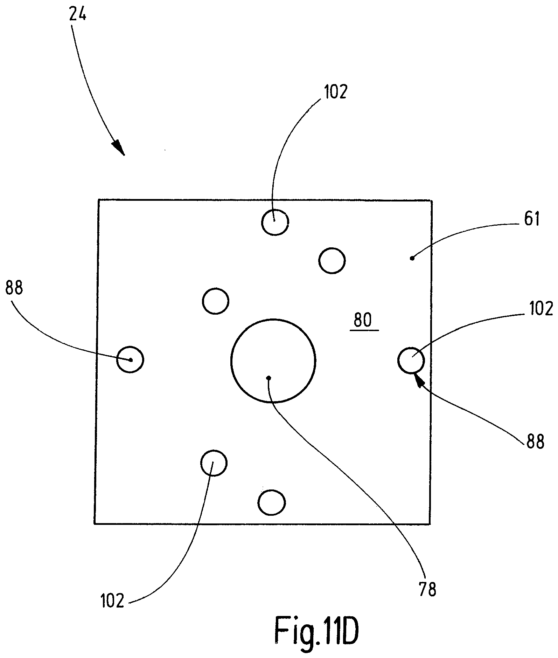

Eine weitere Ausgestaltung zeigt die Fig. 11d. Wie bereits eingangs erwähnt wurde, kann der Grundkörper 61 bspw. auch rechteckig ausgebildet sein. Er muss lediglich eine geschlossene Struktur mit dem freien Zentralbereich 78 aufweisen. Wie der Fig. 11d zu entnehmen ist, können die Beleuchtungsanordnungen auch frei in dem Randbereich ohne jede Symmetrien angeordnet sein.

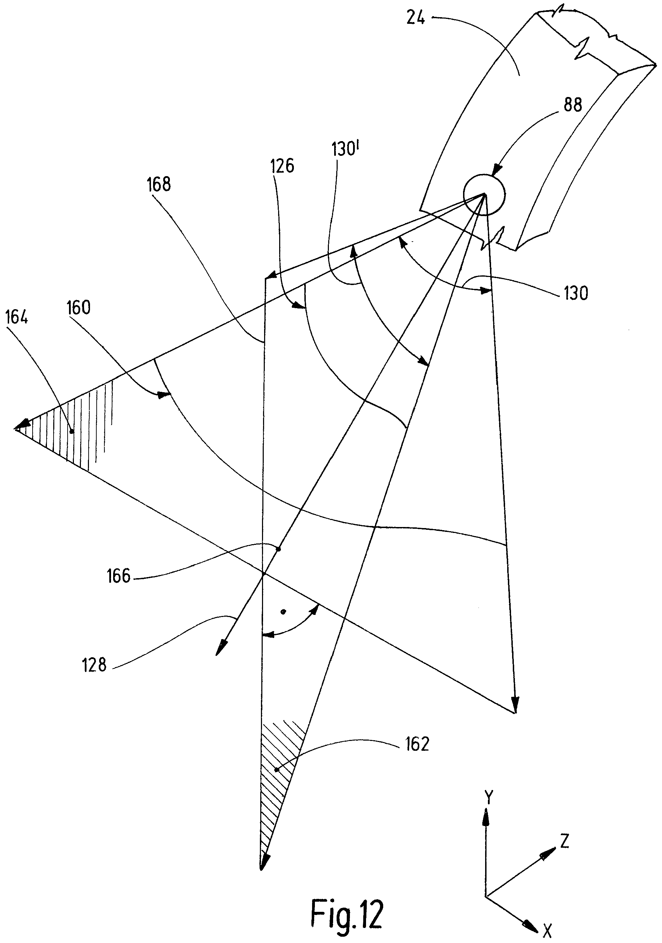

Die Fig. 12 zeigt schematisch die geometrischen Verhältnisse innerhalb des Abstrahlwinkels 130, 130' einer Beleuchtungsanordnung 88. Der Abstrahlwinkel 130,130' ist ein Raumwinkel, daher ist er zum einen mit dem Bezugszeichen 130 in einer ersten Ebene 162 und zum anderen mit dem Bezugszeichen 130' in einer zweiten Ebene 164 gekennzeichnet. Die Figur 12 dient dazu, beispielhaft zu verdeutlichen, welche Richtung sich ein zweiter asymmetrischer Lichtintensitätsverlauf 160 im Verhältnis zu einem ersten asymmetrischen Lichtintensitätsverlauf 120 erstreckt. Der erste Verlauf 126 liegt in der ersten Ebene 162. Senkrecht zu dieser ersten Ebene 162 erstreckt sich in dem vorliegenden Beispiel die zweite Ebene 164, in der der zweite Lichtintensitätsverlauf 160 liegt. Beide sind über den räumlichen Abstrahlwinkel 130 asymmetrisch ausgestaltet. Die erste Ebene 162 und die zweite Ebene 164 schneiden sich in einer Geraden 166, die in dem vorliegenden Beispiel koaxial zu der Richtung maximaler Lichtintensität 128 ist.

Dieses ist jedoch nicht zwingend. Ebenso wenig ist es zwingend, dass die Ebenen senkrecht zueinander verlaufen, sie können sich auch unter einem anderen Winkel schneiden. Mittels der dargestellten beispielhaften Ausführungsform wird es jedoch möglich, bspw. in den in Fig. 9 und 10 dargestellten Beispiele eine Asymmetrie nicht nur in der Y-Z-Ebene, sondern auch in der X-Y-Ebene bereitzustellen. In einer weiteren beispielhaften Ausgestaltung, bspw. in den in den Figuren 11a bis 11d dargestellten Ausgestaltungen, kann zudem vorgesehen sein, dass jede Beleuchtungsanordnung 88 derart ausgerichtet ist, dass sich die ersten Ebenen 162 aller Beleuchtungsanordnungen in einer gemeinsamen Gerade 168 schneiden. Insbesondere kann die dann mit einer etwaigen Rotationssymmetrieachse 134 zusammenfallen.

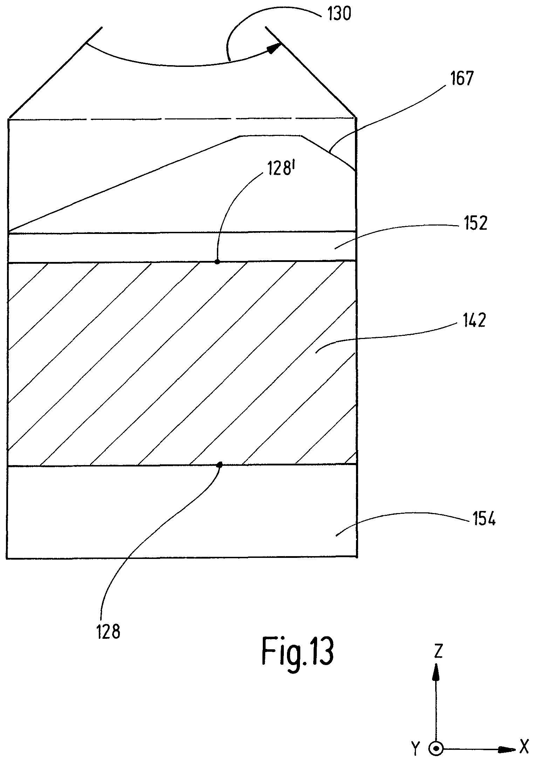

Zur weiteren Verdeutlichung ist in der Fig. 13 eine schematische beispielhafte Darstellung entlang einer Schnittlinie XIII-XIII in der Fig. 9 dargestellt. Gleiche Elemente sind dabei mit gleichen Bezugszeichen gekennzeichnet und werden im Folgenden nicht erneut erläutert. Erkennbar ist erneut, dass aufgrund der in der Fig. 12 dargestellten Asymmetrie der Lichtintensitätsverläufe auch in der Z-X-Ebene ein Lichtintensitätsverlauf 167 auftreten kann, der nicht mehr symmetrisch ist, sondern asymmetrisch verläuft, so dass die Richtung einer maximalen Lichtintensität 128 bzw. 128' auch in dieser Ebene im Abstrahlwinkel 130 nicht mehr mittig liegen muss.

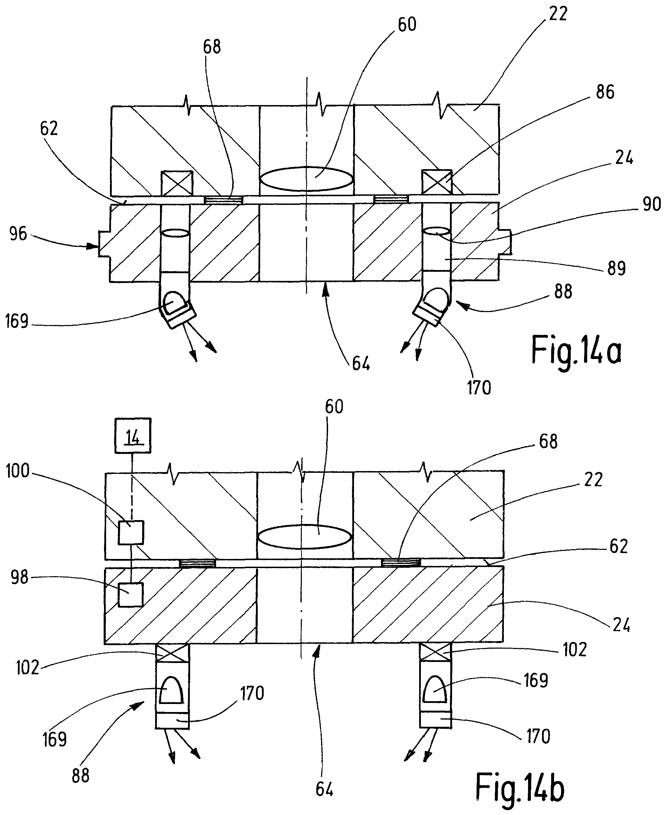

Die Figuren 14a und 14b zeigen weitere Ausgestaltungen des Beleuchtungsmoduls 24 in Kopplung mit dem optischen Sensor 22. Gleiche Elemente wie in den Figuren 5a bis 5c sind mit gleichen Bezugszeichen gekennzeichnet und werden nicht erneut erläutert. Darüber hinaus weist jede Beleuchtungsanordnung 88 ein Kollimationselement 169 auf, dass das Licht der Lichtquelle 102 auf ein refraktives optisches Element 170 kollimiert. Das refraktive optische Element 170, das im Folgenden noch in seiner Ausgestaltung detailliert erläutert wird, bewirkt dann die Ablenkung des kollimierten Strahlenbündels zur Beleuchtung mehrerer Arbeitsabstände einer Abbildungsoptik 60 des optischen Sensors 22.

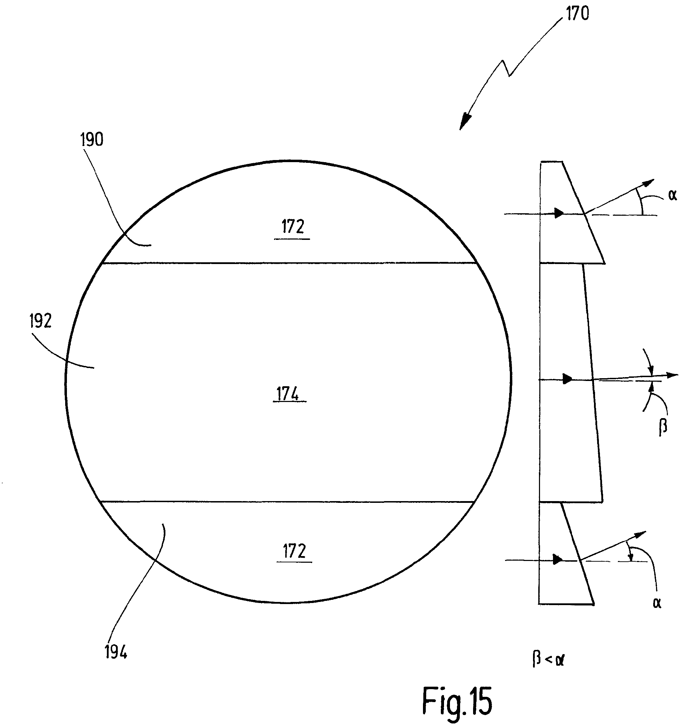

Die Fig. 15 zeigt ein erstes Ausführungsbeispiel eines refraktiven optischen Elements 170. Es kann bspw. einen scheibenförmigen Querschnitt aufweisen. Das refraktive optische Element 170 weist mehrere Subaperturen auf, in der vorliegenden Ausgestaltung zwei Subaperturen. Die erste Subapertur ist mit dem Bezugszeichen 172 und die zweite Subapertur mit dem Bezugszeichen 174 bezeichnet. Jede Subapertur bewirkt einen bestimmten mittleren Strahlablenkungswinkel. Sie hat somit eine bestimmte mittlere prismatische Wirkung. Die erste Subapertur 172 bewirkt dabei einen mittleren Ablenkungswinkel der mit dem Zeichen $\alpha$ gekennzeichnet ist. Die zweite Subapertur 174 bewirkt einen mittleren Ablenkungswinkel, der mit dem Zeichen $\beta$ gekennzeichnet ist. $\beta$ und $\alpha$ sind verschieden voneinander. Auf diese Weise kann die erste Subapertur 172 einen Teil eines kollimierten Strahlenbündels einen ersten Arbeitsabschnitt 144 ablenken, der näher an dem optischen Sensor 22 gelegen ist und die zweite Subapertur 174 einen weiteren Teil des kollimierten Strahlenbündels in den zweiten Arbeitsabschnitt 146 ablenken, der weiter weg von dem optischen Sensor 22 gelegen ist.

Das refraktive optische Element 170 weist drei Bereiche 190, 192 und 194 auf. Die Bereiche 190 und 194 bilden dabei die erste Subapertur 172. Grundsätzlich können auch mehr als zwei Bereiche zum Ausbilden einer Subapertur vorgesehen sein. Der zweite Bereich 192 bildet die zweite Subapertur 174. Allen Bereichen einer Subapertur, insbesondere im Wesentlichen, denselben mittleren Ablenkungswinkel für einen kollimierten Lichtstrahl, also dieselbe mittlere prismatische Wirkung aufweisen.

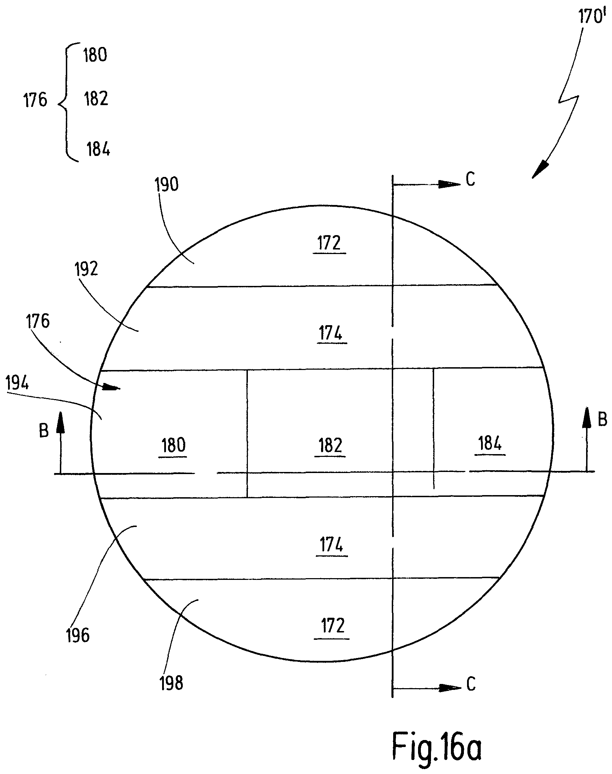

Eine weitere Ausgestaltung eines refraktiven optischen Elements 170 ist in der Fig. 16a dargestellt. Gleiche Elemente sind dabei mit gleichen Bezugszeichen gekennzeichnet und werden im Folgenden nicht erneut erläutert. Das refraktive optische Element 170' weist fünf Bereiche auf, die insgesamt drei Subaperturen 172, 174 und 176 ausbilden. Die Bereiche 190 und 198 bilden die erste Subapertur 172 aus. Die Bereiche 192 und 196 bilden die zweite Subapertur 174 aus. Der Bereich 194 bildet die dritte Subapertur 176 aus. Alle Bereiche sind in ihrer Form streifenförmig und verlaufen parallel zueinander. Grundsätzlich sind jedoch auch andere Formen und Aufteilungen der Bereiche 190 bis 198 denkbar. In dem vorliegenden Beispiel weist der Bereich 194 insgesamt drei Bereichssegmente 180, 182 und 184 auf. Die Bereichssegmente können unterschiedliche Oberflächenkrümmungen aufweisen. Somit ist es möglich, innerhalb des Arbeitsabstands, der durch die dritte Subapertur 176 ausgeleuchtet wird, die Art und Homogenität der Ausleuchtung gezielter zu beeinflussen.

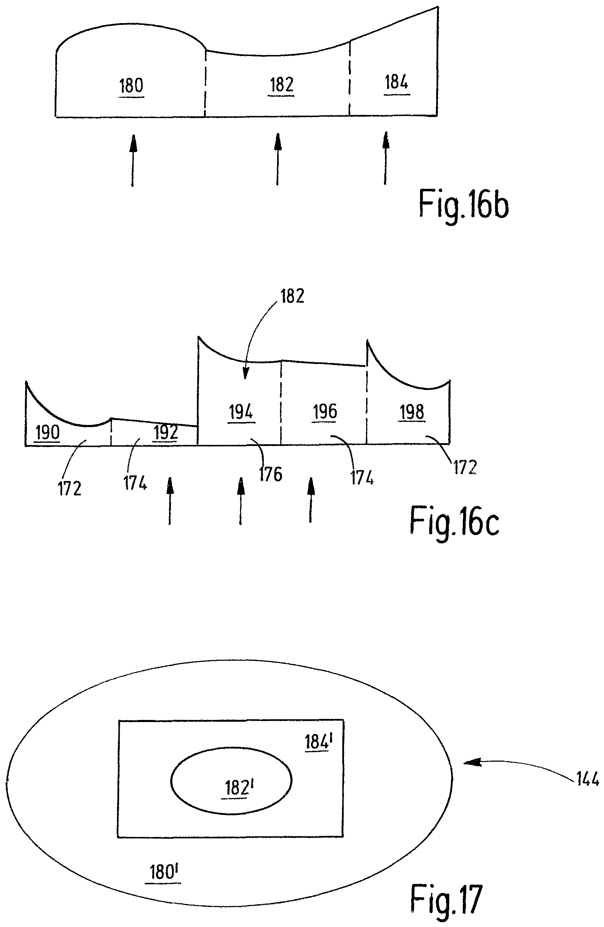

Fig. 16b zeigt einen Schnitt entlang der Linie B-B in der Fig. 16a. Zum Beispiel, kann das Bereichssegment 180 in der Schnittansicht B-B konkav gekrümmt sein, das Bereichssegment 182 konvex und das Bereichssegment 184 einen linearen Verlauf aufweisen.

Wie in der Fig. 16c, die eine schematische Querschnittsansicht entlang der Linie C-C in der Fig. 16a zeigt, zu entnehmen ist, können die Bereichssegmente und auch die Bereiche an sich Oberflächenkrümmungen in zwei Richtungen, die insbesondere senkrecht aufeinander stehen, aufweisen. So weisen die Bereiche 190 und 198 zusätzlich Krümmungen in der Richtung des Schnitts C-C auf. Die Bereiche 192 und 196 weisen diese jedoch nicht auf. Demgegenüber ist bspw. das Bereichssegment 182 des Bereichs 194 zusätzlich in Richtung C-C gekrümmt, und, wie der Fig. 16b zu entnehmen ist, zusätzlich in Richtung B-B gekrümmt. Die Oberfläche des Bereichs 182 weist somit im Wesentlichen die Form eines, insbesondere gekippten, Hohlspiegels auf.

In der Fig. 17 ist schematisch dargestellt, wie in einem Arbeitsabstand 144 die durch die einzelnen Bereiche ausgeleuchteten Flächen ausgeformt sein könnten. Beispielsweise wäre es denkbar, dass das Bereichssegment 182 des Bereichs 194 einen im Wesentlichen kreisförmigen zentralen Bereich ausleuchtet. Demgegenüber könnte das Bereichssegment eine diffuse aber sehr homogene Hintergrundbeleuchtung bereitstellen. Zur Verbesserung der Beleuchtung insbesondere für rechteckförmige Sensorarrays optischer Sensoren könnte dann bspw. vorgesehen sein, dass das Bereichssegment 184 eine im Wesentlichen rechteckige Ausleuchtung bereitstellt, die die zentrale Ausleuchtung durch das Bereichssegment 182 umgibt und so einen Schwerpunkt auf eine derartige rechteckige Ausleuchtung legt.

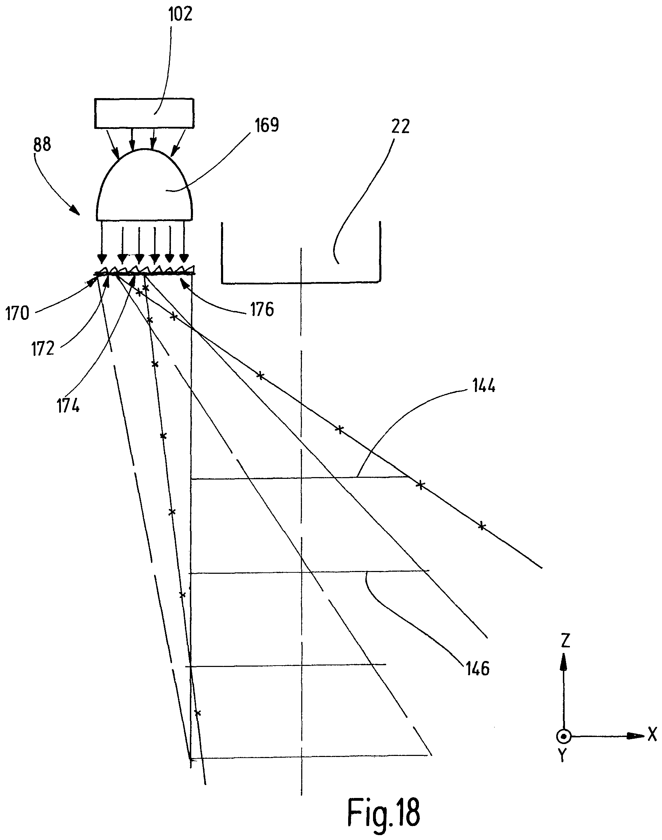

In Fig. 18 ist eine weitere Ausgestaltungsmöglichkeit eines refraktiven optischen Elements 170 verdeutlicht. Abhängig von den geometrischen Anordnungen der Arbeitsabschnitte 144, 146 und ihres Abstandes zu den Beleuchtungsanordnungen 88 kann in entsprechenden Koordinatenmessgeräten vorgesehen sein, dass das refraktive optische Element eine Kaustik zur Beleuchtung eines Arbeitsabstands nutzt. Bei einer derartigen "Kaustik" liegt ein Brennpunkt, der durch die jeweilige Subapertur 174 oder 176 erzeugt ist vor der entsprechenden Ebene des Arbeitsabstandes 144, 146, so dass im Arbeitsabstand 144, 146 bereits wieder ein divergierendes Strahlenbündel vorliegt. Mittels der Nutzung einer solchen Kaustik kann in der Regel eine verbesserte Homogenität bei der Ausleuchtung eines Arbeitsabstands 144, 146 erzielt werden.

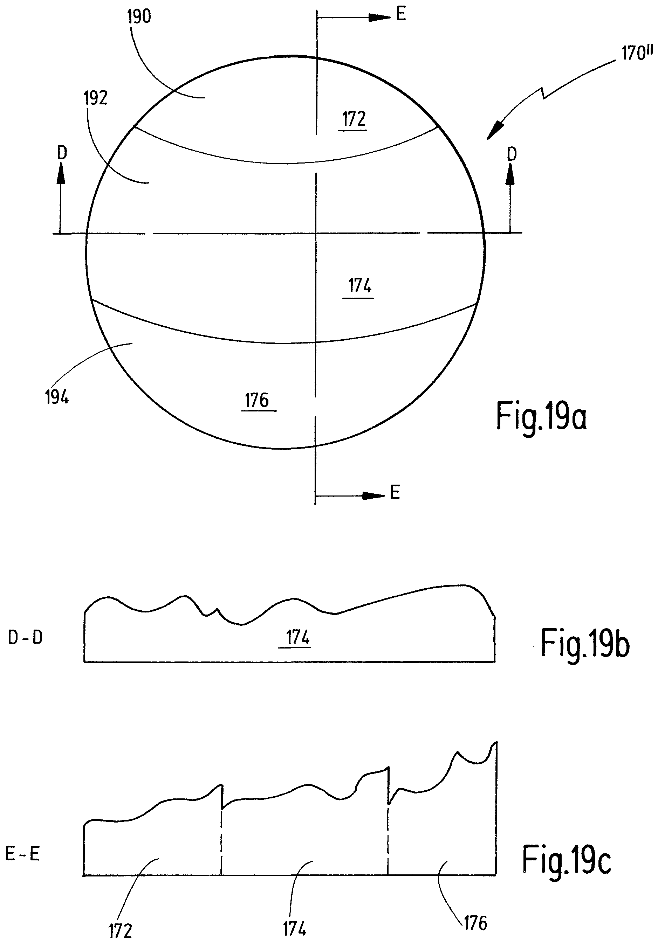

Die Figuren 19a bis 19c zeigen eine weitere beispielhafte Ausgestaltung eines refraktiven optischen Elements, die mit dem Bezugszeichen 170" gekennzeichnet ist. Ähnliche Elemente sind mit gleichen Bezugszeichen gekennzeichnet.

Das refraktive optische Element 170" weist drei Subaperturen 172, 174 und 176 auf, die jeweils durch genau einen einzigen, zusammenhängenden Bereich 190, 192 bzw. 194 ausgebildet sind. Die drei Subaperturen 172, 174, 176 sind ebenfalls als nebeneinander liegende Streifen ausgebildet, jedoch nicht mit gerade verlaufenden Begrenzungslinien, sondern als konzentrisch angeordnete Ringbogenabschnitte. Die Begrenzungslinien zwischen den Subaperturen 172, 174, 176 sind daher konzentrische Kreisbogenabschnitte. Jede Subapertur 172, 174, 176 weist genau einen Bereich auf, der als Freiformfläche ausgebildet ist, wie dies schematisch den Fig. 19b und 19c entnehmbar ist, Auf diese Weise ist es möglich, beispielsweise eine wie in der Fig. 17 dargestellte Ausleuchtung auch ohne diskret abgegrenzte Bereichssegmente bereitzustellen, sondern durch eine geeignet ausgestaltete Freiformfläche. Wie der Fig. 19c zu entnehmen ist, kann dennoch eine "Fresnellisierung" der Freiformfläche bereitgestellt sein, um die mittleren prismatischen Wirkungen der einzelnen Subaperturen 172, 174, 176 einzustellen.

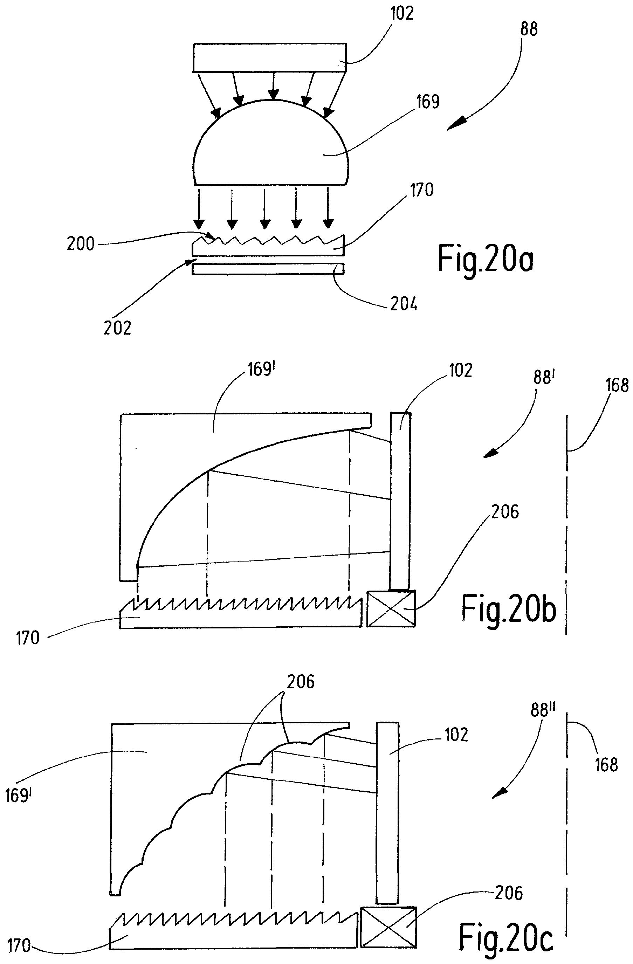

In den Figuren 20a bis 20c sind weitere Ausgestaltungen einer Beleuchtungseinrichtung 88 dargestellt. Ähnliche Elemente sind mit gleichen Bezugszeichen gekennzeichnet.

In der Figur 20a ist das Kollimationselement 169 als refraktives Element ausgebildet. Das Kollimationselement ist in dieser Ausgestaltung ein separates refraktives optisches Element, das zusätzlich zu dem refraktiven optischen Element 170 bereitgestellt ist. Das refraktive optische Element 170 weist eine dem Werkstück 18 abgewandte Oberfläche 200 und eine dem Werkstück 18 zugewandte Oberfläche 202 auf. Vorzugsweise wird eine gewünschte optische Wirkung des refraktiven optischen Elements 170 durch eine entsprechende Ausgestaltung der dem Werkstück 18 abgewandten Oberfläche 200 bereitgestellt, wobei die dem Werkstück 18 zugewandte Oberfläche 202 glatt oder eben verbleibt. So lässt sich diese außen liegende Oberfläche 202 der Beleuchtungsanordnung 88 leichter reinigen.

Um eine diffuse bzw. diffusere Ausleuchtung bereitzustellen kann des Weiteren vorgesehen, dass vor oder an der dem Werkstück 18 zugewandten Oberfläche 202 ein diffuser optischer und/oder holografischer optischer Vorsatz angeordnet ist.

Die Fig. 20b zeigt eine weitere Ausgestaltung der Beleuchtungsanordnung 88'. In dieser ist ein Kollimationselement 169' nicht als refraktives optisches Element, sondern als reflektierendes optisches Element bzw. als Spiegel ausgebildet. Das von der Lichtquelle 102 emittierte Licht muss dabei nicht zwingend um 90° umgelenkt werden, wie dies die Figur 20b zeigt, auch andere Winkel sind denkbar. Des Weiteren ist es wie in der Figur 20c gezeigt möglich, dass ein reflektierendes Kollimationselement 169' auf seiner Oberfläche mehrere Teilbereiche 206 aufweist, die das von der Lichtquelle 102 emittierte Licht abschnittsweise auf das reflektierende optische Element kollimieren.

Aufgrund der Ausgestaltungen der Figuren 20b oder 20c ist es möglich, die Lichtquelle 102 bezüglich des optischen Sensors 22 oder der Geraden 168 radial innen oder radial außen relativ zu dem refraktiven optischen Element 170 anzuordnen. Dies ermöglicht es beispielsweise, in dem Beleuchtungsmodul 24 ein ringförmiges Kühlelement 206 anzuordnen. Mit dem ringförmigen Kühlelement 206 können beispielsweise die Lichtquellen 102 aller Beleuchtungsanordnungen 88 gekühlt werden. Bei dem Kühlelement 206 kann es sich beispielsweise um eine von einem Kühlmedium durchströmte Leitung handeln.

**Patentansprüche**

1. Koordinatenmessgerät (10) zum Vermessen eines Werkstücks (18) mittels eines optischen Sensors (22), wobei das Koordinatenmessgerät ein Beleuchtungsmodul (24) aufweist, wobei das Beleuchtungsmodul (24) einen Grundkörper (61) mit einer Sensorseite (62) und einer Werkstückseite (64) aufweist, wobei das Beleuchtungsmodul (24) an dem Grundkörper (61) mindestens eine Beleuchtungsanordnung (88, 104, 106) zum Beleuchten des Werkstücks (18) aufweist, wobei die mindestens eine Beleuchtungsanordnung (88, 104, 106) eine Abstrahlcharakteristik (126, 160) mit einem Abstrahlwinkel (130) und einem ersten Lichtintensitätsverlauf (126) In einer ersten Ebene (162) Innerhalb des Abstrahlwinkels (130) aufweist, und wobei die Abstrahlcharakteristik (126, 160) des Weiteren einen zweiten Lichtintensitätsverlauf (160) in einer zweiten Ebene (164) innerhalb des Abstrahiwinkels (130) aufweist, **dadurch gekennzeichnet, dass** der erste Lichtintensitätsverlauf (126) der mindestens einen Beleuchtungsanordnung (88, 104, 106) innerhalb der ersten Ebene (162) asymmetrisch ist, und wobei der zweite Lichtintensitätsverlauf (160) der mindestens einen Beleuchtungsanordnung (88,104,106) innerhalb der zweiten Ebene (164) asymmetrisch ist, wobei das Beleuchtungsmodul (24) mehrere Beleuchtungsanordnungen (88, 104, 106) aufweist, wobei sich die ersten Ebenen (162) der Beleuchtungsanordnungen (88, 104, 106) In einer einzigen Geraden (168) schneiden, und wobei ein Messkegel oder Messzylinder (132) des optischen Sensors (22) entlang der Geraden (168) verläuft.

2. Koordinatenmessgerät nach Anspruch 1, **dadurch gekennzeichnet, dass** die erste Ebene (162) und die zweite Ebene (164) senkrecht aufeinander stehen.

3. Koordinatenmessgerät nach Anspruch 1 oder 2, **dadurch gekennzeichnet, dass** sich die erste Ebene (162) und die zweite Ebene (164) in einer Geraden schneiden (166), die einer Richtung der maximalen Lichtintensität (126) einer Jeweiligen Beleuchtungsanordnung der mindestens einen Beleuchtungsanordnung (88, 104, 106) entspricht.

4. Koordinatenmessgerät nach einem der Ansprüche 1 bis 3, dadurch gekennzelchnet, dass die mindestens eine Beleuchtungsanordnung (88, 104, 106) jeweils mindestens ein refraktives optisches Element (90, 103, 136, 150, 170) aufweist, das die Abstrahlcharakteristik (126, 130) der jeweiligen Beleuchtungsanordnung (88, 104, 106) moduliert.

5. Koordinatenmessgerät nach Anspruch 4, **dadurch gekennzeichnet, dass** die Beleuchtungsanordnung (88, 104, 106) des Weiteren mindestens ein Kollimationselement (169) zum Bereitstellen eines kollimierten Strahlenbündels auf das mindestens eine refraktive optische Element (90, 103, 136, 150, 170) aufweist.

6. Koordinatenmessgerät nach Anspruch 4 oder 5, **dadurch gekennzeichnet, dass** das mindestens eine refraktive optische Element (90, 103, 136, 150, 170) mehrere Subaperturen (170, 172, 174) aufweist.

**7.** Koordinatenmessgerät nach Anspruch 6, **dadurch gekennzeichnet, dass** eine Oberfläche des mindestens einen refraktiven optischen Elements (90, 103, 136, 150, 170) mindestens zwei Bereiche (190, 192, 194, 196, 198) aufweist, wobei eine Subapertur (170, 172, 174) jeweils von mindestens einem der Bereiche (190, 192, 194, 196, 198) ausgebildet ist.

**8.** Koordinatenmessgerät nach Anspruch 7, **dadurch gekennzeichnet, dass** die Bereiche (190, 192, 194, 196, 198) in Form von nebeneinander verlaufenden Streifen ausgebildet sind.

**9.** Koordinatenmessgerät (10) nach Anspruch 7 oder 8, wobei der optische Sensor mehrere Arbeitsabstände aufweist, und wobei jede Subapertur (170.172,174) zum Ausleuchten eines anderen Arbeitsabstands des optischen Sensors ausgebildet ist.

**10.** Koordinatenmessgerät (10) zum Vermessen eines Werkstücks (18) mittels eines optischen Sensors (22), wobei das Koordinatenmessgerät ein Beleuchtungsmodul (24) aufweist, wobei das Beleuchtungsmodul (24) einen Grundkörper (61) mit einer Sensorseite (62) und einer Werkstückseite (64) aufweist, wobei das Beleuchtungsmodul (24) an dem Grundkörper (61) mindestens eine Beleuchtungsanordnung (88, 104, 106) zum Beleuchten des Werkstücks (18) aufweist, und wobei die mindestens eine Beleuchtungsanordnung (88, 104, 106) eine Abstrahlcharakteristik (126, 130) mit einem Abstrahlwinkel (130) und einem Lichtintensitätsverlauf (126) innerhalb des Abstrahlwinkels (130) aufweist, **dadurch gekennzeichnet, dass** der Lichtintensitätsverlauf (126) der mindestens einen Beleuchtungsanordnung (86, 104, 106) Innerhalb des Abstrahlwinkels (130) asymmetrisch Ist, dass die mindestens eine Beleuchtungsanordnung (88, 104, 106) jeweils mindestens ein refraktives optisches Element (90, 103, 136, 150, 170) aufweist, das die Abstrahlcharakteristik (126. 160) der jeweiligen Beleuchtungsanordnung (88, 104, 106) moduliert, dass die Beleuchtungsanordnung des Weiteren mindestens ein Kollimationselement zum Bereitstellen eines kollimierten Strahlenbündels auf das mindestens eine refraktive optische Element (90, 103, 136, 150, 170) aufweist. und dass das mindestens eine refraktive optische Element (90, 103, 136, 150, 170) mehrere Subaperturen (170, 172, 174) aufweist, wobei der optische Sensor mehrere Arbeitsabstände aufweist, und wobei jede Subapertur (170, 172, 174) zum Ausleuchten eines anderen Arbeitsabstands des optischen Sensors ausgebildet Ist.

**11.** Koordinatenmessgerät nach Anspruch 10, **dadurch gekennzeichnet, dass** eine Oberfläche des mindestens einen refraktiven optischen Elements (90, 103, 136, 150, 170) mindestens zwei Bereiche (190, 192, 194, 196, 198) aufweist, wobei eine Subapertur (170, 172, 174) jeweils von mindestens einem der Bereiche (190, 192, 194, 196, 198) ausgebildet ist.

**12.** Koordinatenmessgerät nach Anspruch 11, **dadurch gekennzeichnet, dass** die Bereiche (190, 192, 194, 196, 198) In Form von nebeneinander verlaufenden Streifen ausgebildet sind.

**13.** Koordinatenmessgerät nach Anspruch 11 oder 12, **dadurch gekennzeichnet, dass** mindestens einer der Bereiche (190, 192, 194, 196. 198) mehrere Bereichssegmente (180, 182, 184) aufweist, wobei die Bereichssegmente (180, 182, 184) jeweils unterschiedliche Oberflächenkrümmungsverläufe aufweisen.

**14.** Koordinatenmessgerät nach einem der Ansprüche 10 bis 13, **dadurch gekennzeichnet, dass** eine Oberfläche mindestens einer der Bereiche (190, 192, 194, 196, 198) zumindest teilweise als Freiformfläche ausgebildet Ist.

**15.** Koordinatenmessgerät nach einem der Ansprüche 11 bis 14, **dadurch gekennzeichnet, dass** mindestens einer der Bereiche (190, 192, 194, 196, 198) oder mindestens eines der Bereichssegmente (180, 182, 184) eine Oberfläche aufweist, die In zwei senkrecht zueinander verlaufenden Richtungen gekrümmt ist.

**Claims**

**1.** Coordinate measuring machine (10) for measuring a workpiece (18) using an optical sensor (22), wherein the coordinate measuring machine has an illumination module (24), wherein the illumination module (24) has a base body (61) having a sensor side (62) and a workpiece side (64), wherein the illumination module (24) has, at the base body (61), at least one illumination arrangement (88, 104, 106) for illuminating the workpiece (18), wherein the at least one illumination arrangement (88, 104, 106) has a radiation pattern (126, 160) with a beam angle (130) and a first light intensity profile (126) in a first plane (162) within the beam angle (130), and wherein the radiation pattern (126, 160) furthermore has a second light intensity profile (160) in a second plane (164) within the beam angle (160), **characterized in that** the first light intensity profile (126) of the at least one illumination arrangement (88, 104, 106) is asymmetric within the first plane (162), and wherein the second light intensity profile (160) of the at least one illumination arrangement (88, 104, 106) is asymmetric within the second plane (164), wherein the illumination module (24) has a plurality of illumination arrangements (88, 104, 106), wherein the first planes (162) of the illumination arrangements (88, 104, 106) intersect in a single straight line (168), and wherein a measurement cone or measurement cylinder (132) of the optical sensor (22) extends along the straight line (168).

2. Coordinate measuring machine according to Claim 1, **characterized in that** the first plane (162) and the second plane (164) are perpendicular to one another.

3. Coordinate measuring machine according to Claim 1 or 2, **characterized in that** the first plane (162) and the second plane (164) intersect in a straight line (166) which corresponds to a direction of maximum light intensity (128) of a respective illumination arrangement of the at least one illumination arrangement (88, 104, 106).

4. Coordinate measuring machine according to one of Claims 1 to 3, **characterized in that** the at least one illumination arrangement (88, 104, 106) has in each case at least one refractive optical element (90, 103, 136, 150, 170) which modulates the radiation pattern (162, 130) of the respective illumination arrangement (88, 104, 106).

5. Coordinate measuring machine according to Claim 4, **characterized in that** the illumination arrangement (88, 104, 106) furthermore has at least one collimation element (169) for providing a collimated bundle of rays onto the at least one refractive optical element (90, 103, 136, 150, 170).

6. Coordinate measuring machine according to Claim 4 or 5, **characterized in that** the at least one refractive optical element (90, 103, 136, 150, 170) has a plurality of sub-apertures (170, 172, 174).

7. Coordinate measuring machine according to Claim 6, **characterized in that** a surface of the at least one refractive optical element (90, 103, 136, 150, 170) has at least two regions (190, 192, 194, 196, 198), wherein a sub-aperture (170, 172, 174) is in each case formed by at least one of the regions (190, 192, 194, 196, 198) .

8. Coordinate measuring machine according to Claim 7, **characterized in that** the regions (190, 192, 194, 196, 198) are embodied in the form of stripes which extend one next to the other.

9. Coordinate measuring machine (10) according to Claim 7 or 8, wherein the optical sensor has a plurality of working distances, and wherein each sub-aperture (170, 172, 174) is embodied for lighting a different working distance of the optical sensor.

10. Coordinate measuring machine (10) for measuring a workpiece (18) using an optical sensor (22), wherein the coordinate measuring machine has an illumination module (24), wherein the illumination module (24) has a base body (61) having a sensor side (62) and a workpiece side (64), wherein the illumination module (24) has, at the base body (61), at least one illumination arrangement (88, 104, 106) for illuminating the workpiece (18), and wherein the at least one illumination arrangement (88, 104, 106) has a radiation pattern (126, 130) with a beam angle (130) and a light intensity profile (126) within the beam angle (130), **characterized in that** the light intensity profile (126) of the at least one illumination arrangement (88, 104, 106) is asymmetric within the beam angle (130), **in that** the at least one illumination arrangement (88, 104, 106) has in each case at least one refractive optical element (90, 103, 136, 150, 170) which modulates the radiation pattern (126, 160) of the respective illumination arrangement (88, 104, 106), **in that** the illumination arrangement furthermore has at least one collimation element for providing a collimated bundle of rays onto the at least one refractive optical element (90, 103, 136, 150, 170), and **in that** the at least one refractive optical element (90, 103, 136, 150, 170) has a plurality of sub-apertures (170, 172, 174), wherein the optical sensor has a plurality of working distances, and wherein each sub-aperture (170, 172, 174) is embodied for lighting a different working distance of the optical sensor.

11. Coordinate measuring machine according to Claim 10, **characterized in that** a surface of the at least one refractive optical element (90, 103, 136, 150, 170) has at least two regions (190, 192, 194, 196, 198), wherein a sub-aperture (170, 172, 174) is in each case formed by at least one of the regions (190, 192, 194, 196, 198) .

12. Coordinate measuring machine according to Claim 11, **characterized in that** the regions (190, 192, 194, 196, 198) are embodied in the form of stripes which extend one next to the other.

13. Coordinate measuring machine according to Claim 11 or 12, **characterized in that** at least one of the regions (190, 192, 194, 196, 198) has a plurality of region segments (180, 182, 184), wherein the region segments (180, 182, 184) in each case have different surface curvature profiles.

14. Coordinate measuring machine according to one of Claims 10 to 13, **characterized in that** a surface of at least one of the regions (190, 192, 194, 196, 198) is embodied at least partially as a free-form surface.

15. Coordinate measuring machine according to one of Claims 11 to 14, **characterized in that** at least one of the regions (190, 192, 194, 196, 198) or at least one of the region segments (180, 182, 184) has a surface that is curved in two directions that are perpendicular to one another.

## Revendications

1. Dispositif de mesure de coordonnées (10) destiné à mesurer une pièce (18) au moyen d'un capteur optique (22), dans lequel le dispositif de mesure de coordonnées comporte un module d'éclairage (24), dans lequel le module d'éclairage (24) comporte un corps de base (61) pourvu d'un côté capteur (62) et d'un côté pièce (64), dans lequel le module d'éclairage (24) comporte sur le corps de base (61) au moins un moyen d'éclairage (88, 104, 106) servant à éclairer la pièce (18), dans lequel l'au moins un moyen d'éclairage (88, 104, 106) présente une caractéristique de rayonnement (126, 160) ayant un angle de rayonnement (130) et un premier profil d'intensité lumineuse (126) dans un premier plan (162) à l'intérieur de l'angle de rayonnement (130), et dans lequel la caractéristique de rayonnement (126, 160) présente en outre un deuxième profil d'intensité lumineuse (160) dans un deuxième plan (164) à l'intérieur de l'angle de rayonnement (130), **caractérisé en ce que** le premier profil d'intensité lumineuse (126) de l'au moins un moyen d'éclairage (88, 104, 106) est asymétrique à l'intérieur du premier plan (162), et dans lequel le deuxième profil d'intensité lumineuse (160) de l'au moins un moyen d'éclairage (88, 104, 106) est asymétrique à l'intérieur du deuxième plan (164), dans lequel le module d'éclairage (24) comporte plusieurs moyens d'éclairage (88, 104, 106), dans lequel les premiers plans (162) des moyens d'éclairage (88, 104, 106) se coupent suivant des droites uniques (168), et dans lequel un cône de mesure ou un cylindre de mesure (132) du capteur optique (22) s'étend le long desdites droites (168).

2. Dispositif de mesure de coordonnées selon la revendication 1, **caractérisé en ce que** le premier plan (162) et le deuxième plan (164) sont perpendiculaires l'un à l'autre.

3. Dispositif de mesure de coordonnées selon la revendication 1 ou 2, **caractérisé en ce que** le premier plan (162) et le deuxième plan (164) se coupent suivant une droite (166) qui correspond à une direction de l'intensité lumineuse maximale (128) d'un moyen d'éclairage respectif dudit au moins un moyen d'éclairage (88, 104, 106).

4. Dispositif de mesure de coordonnées selon l'une des revendications 1 à 3, **caractérisé en ce que** l'au moins un moyen d'éclairage (88, 104, 106) comporte respectivement au moins un élément optique réfractant (90, 103, 136, 150, 170) qui module la caractéristique de rayonnement (126, 130) du moyen d'éclairage (88, 104, 106) respectif.

5. Dispositif de mesure de coordonnées selon la revendication 4, **caractérisé en ce que** le moyen d'éclairage (88, 104, 106) comporte en outre au moins un élément de collimation (169) destiné à fournir un faisceau de rayonnement collimaté sur l'au moins un élément optique réfractant (90, 103, 136, 150, 170).

6. Dispositif de mesure de coordonnées selon la revendication 4 ou 5, **caractérisé en ce que** l'au moins un élément optique réfractant (90, 103, 136, 150, 170) comporte plusieurs sous-ouvertures (170, 172, 174).

7. Dispositif de mesure de coordonnées selon la revendication 6, **caractérisé en ce qu'**une surface dudit au moins un élément optique réfractant (90, 103, 136, 150, 170) comporte au moins deux zones (190, 192, 194, 196, 198), dans lequel une sous-ouverture (170, 172, 174) est respectivement constituée d'au moins l'une des zones (190, 192, 194, 196, 198).

8. Dispositif de mesure de coordonnées selon la revendication 7, **caractérisé en ce que** les zones (190, 192, 194, 196, 198) sont réalisées sous la forme de bandes s'étendant les unes à côté des autres.

9. Dispositif de mesure de coordonnées (10) selon la revendication 7 ou 8, dans lequel le capteur optique présente plusieurs distances de travail, et dans lequel chaque sous-ouverture (170, 172, 174) est conçue pour éclairer une autre distance de travail du capteur optique.

10. Dispositif de mesure de coordonnées (10) destiné à mesurer une pièce (18) au moyen d'un capteur optique (22), dans lequel le dispositif de mesure de coordonnées comporte un module d'éclairage (24), dans lequel le module d'éclairage (24) comporte un corps de base (61) pourvu d'un côté capteur (62) et d'un côté pièce (64), dans lequel le module d'éclairage (24) comporte sur le corps de base (61) au moins un moyen d'éclairage (88, 104, 106) servant à éclairer la pièce (18), et dans lequel l'au moins un moyen d'éclairage (88, 104, 106) présente une caractéristique de rayonnement (126, 130) ayant un angle de rayonnement (130) et un profil d'intensité lumineuse (126) à l'intérieur de l'angle de rayonnement (130), **caractérisé en ce que** le profil d'intensité lumineuse (126) de l'au moins un moyen d'éclairage (88, 104, 106) est asymétrique à l'intérieur de l'angle de rayonnement (130), **en ce que** l'au moins un moyen d'éclairage (88, 104, 106) comporte respectivement au moins un élément optique réfractant (90, 103, 136, 150, 170) qui module la caractéristique de rayonnement (126, 160) du moyen d'éclairage (88, 104, 106) respectif, **en ce que** le moyen d'éclairage comporte en outre au moins un élément de collimation destiné à fournir un faisceau de rayonnement collimaté sur l'au moins élément optique réfractant (90, 103, 136, 150, 170), et **en ce que** l'au moins un élément optique réfractant (90, 103, 136, 150, 170) comporte plusieurs sous-ouvertures (170, 172, 174), dans lequel le capteur optique présente plusieurs distances de travail, et dans lequel chaque sous-ouverture (170, 172, 174) est conçue pour éclairer une autre distance de travail du capteur optique.

**11.** Dispositif de mesure de coordonnées selon la revendication 10, **caractérisé en ce qu'**une surface de l'au moins un élément optique réfractant (90, 103, 136, 150, 170) comporte au moins deux zones (190, 192, 194, 196, 198), dans lequel une sous-ouverture (170, 172, 174) est respectivement constituée d'au moins l'une des zones (190, 192, 194, 196, 198).

**12.** Dispositif de mesure de coordonnées selon la revendication 11, **caractérisé en ce que** les zones (190, 192, 194, 196, 198) sont réalisées sous la forme de bandes s'étendant les unes à côté des autres.

**13.** Dispositif de mesure de coordonnées selon la revendication 11 ou 12, **caractérisé en ce qu'**au moins l'une des zones (190, 192, 194, 196, 198) comporte plusieurs segments de zones (180, 182, 184), dans lequel les segments de zones (180, 182, 184) présentent respectivement des profils de courbure de surface différents.

**14.** Dispositif de mesure de coordonnées selon l'une des revendications 10 à 13, **caractérisé en ce qu'**une surface d'au moins l'une des zones (190, 192, 194, 196, 198) est réalisée au moins en partie sous la forme d'une surface de forme libre.

**15.** Dispositif de mesure de coordonnées selon l'une des revendications 11 à 14, **caractérisée en ce qu'**au moins l'une des zones (190, 192, 194, 196, 198) ou **en ce qu'**au moins l'un des segments de zones (180, 182, 184) présente une surface qui est incurvée dans deux directions s'étendant perpendiculairement l'une à l'autre.

Fig.1

Fig.2

Fig.3

Fig.4

Fig.5a

Fig.5b

Fig.5c

Fig.6

Fig.7

Fig.8

EP 3 066 415 B1

Fig.9

Fig.10

Fig.11A

Fig.11B

Fig.11C

Fig.11D

Fig.12

Fig.13

Fig.14a

Fig.14b

170

190

172

192

174

172

194

α

β

α

β < α

# Fig.15

Fig.16a

Fig.16b

Fig.16c

Fig.17

Fig.18

190

192

172

170"

D

D

174

194

176

Fig.19a

E

E

D-D

174

Fig.19b

E-E

Fig.19c

172

174

176

102

88

169

170

200

202

204

**Fig.20a**

169'

102

88'

168

206

170

**Fig.20b**

206

169'

102

88''

168

206

170

206

**Fig.20c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0362625 A2
- EP 0385262 A2
- EP 1373827 B1
- WO 2005059470 A1

- EP 2469300 A1
- US 20120307495 A1
- EP 0969304 A2